# EUROPÄISCHE PATENTSCHRIFT

(11) **EP 0 791 438 B1**
(45) Veröffentlichungstag und Bekanntmachung des Hinweises auf die Patenterteilung: **29.05.2002**
(21) Anmeldenummer: 97101704.1
(22) Anmeldetag: 04.02.1997
(51) Int. Cl.: B25J 9/10, F16H 21/46, B25J 17/02

(54) **Vorrichtung zur Bewegung eines Körpers im Raum**
Device for moving a body in space
Dispositif pour le déplacement d'un corps dans l'espace

(30) Priorität: 07.02.1996 DE 19604420; 21.01.1997 DE 19701830
(43) Veröffentlichungstag der Anmeldung: 27.08.1997
(73) Patentinhaber: Verein Deutscher Werkzeugmaschinenfabriken e.V. (VDW), 60325 Frankfurt am Main (DE)
(72) Erfinder: Pritschow, Günter, Prof.-Dr.Ing.Dr.h.c., 70192 Stuttgart (DE); Wurst, Karl-Heinz, Dr.-Ing., 70825 Korntal-Münchingen (DE)
(74) Vertreter: Kohl, Karl-Heinz

(56) Entgegenhaltungen:
- EP-A- 0 314 839
- EP-A- 0 494 565
- DE-A- 19 525 482
- US-A- 4 776 749
- US-A- 4 933 531
- US-A- 5 279 176
- KRAINEV A F ET AL: "USE OF MECHANISMS OF PARALLEL STRUCTURE" SOVIET ENGINEERING RESEARCH (STANKI I INSTRUMENTY & VESTNIK MASHINOSTROENIA MASHINOSTROCNIE), Bd. 11, Nr. 11, Seiten 10-15, XP000301589

## Beschreibung

Die Erfindung betrifft eine Anordnung zur Bewegung eines Körpers im Raum nach dem Oberbegriff des Anspruches 1.

Es ist bekannt, die Plattform von sogenannten oktaedrischen Maschinen über sechs Teleskopbeine zu bewegen. Sie ermöglichen die Bewegung in sechs unabhängigen Freiheitsgraden. Die Teleskopbeine sind in Kugelgelenken oder kardanischen Gelenken gelagert und werden über Gewindespindeln, Planetenrollspindeln oder Linear-Direktantriebe angetrieben. Die Antriebe sind hierzu in die Teleskopbeine integriert. Zwischen den Endpunkten an der Plattform und einem ortsfesten Grundgestellteil spannen die Teleskopbeine eine dreieckförmige Fläche auf. Die Gelenke sind am ortsfesten Gestell so angeordnet, daß die Verbindungslinien, die durch die Grundlinien der Dreiecksflächen gebildet sind, ein Hexagon beschreiben.

Sechs Teleskopbeine werden nur dann zur Bewegung einer Plattform in sechs Freiheitsgraden benötigt, wenn pro Teleskopbein nur ein Antrieb für einen aktiven Freiheitsgrad integriert ist. Werden beispielsweise zwei Antriebe für zwei aktive Freiheitsgrade pro Teleskopbein integriert, reduziert sich die Zahl der Teleskopbeine auf drei.

Der Endpunkt jedes Teleskopbeines ist in drei Freiheitsgraden X, Y, Z beweglich. Es sind Vorrichtungen mit drehbaren, aber ortsfesten Fußpunkten und motorisch verstellbaren längenveränderlichen Beinen oder motorisch veränderlichen Fußpunkten und motorisch längenveränderlichen Beinen bekannt. Um Anordnung mit weniger als sechs Freiheitsgraden für die Plattform realisieren zu können, sind Parallelogrammanordnungen zum Sperren von Freiheitsgradne vorgeschlagen worden, wie zum Beispiel Parallelogramme zum Sperren aller Orientierungsrichtungen bei ortsfesten Fußpunkten der Beine oder auch bei ortsveränderlichen Fußpunkten in Form von Hexaglides.

Merkmal aller bisher bekannten Stabkinematiken für maschinentechnische Anwendungen ist die Verwendung einer Plattform als Werkzeug- oder Werkstückträger.

Neben den Vorteilen eines massenarmen Bewegungsapparates, der sich für hohe Beschleunigungen besonders eignet, besitzt diese Anordnung jedoch erhebliche Nachteile. Die Fähigkeit zur Orientierungsänderung ist bei einer Hexapodvorrichtung im allgemeinen eingeschränkt auf >30°, da bei größeren Orientierungsänderungen die Beine einander behindern. Die Vielzahl der Gelenke in jedem System ergibt eine Vielzahl von nicht linearen Nachgiebigkeitsstellen, die nur über eine Vorspannung linearisiert werden können. Aufgrund der geometrischen Anordnung kann diese Vorspannung nicht über die Verbindungsarme selbst aufgebracht werden, sondern nur durch eine Vorspannung jedes Einzellagers.

Bei der gattungsgemäßen Vorrichtung (US-A-5 279 176) ist der Körper ebenfalls als Plattform ausgebildet, die mit den Längenunveränderlichen Verbindungsarmen im Raum verstellt werden kann.

Bei einer anderen Vorrichtung (US-A-4 776 749) sind die Antriebe in den Verbindungsarmen vorgesehen. Mit den Antrieben werden die Verbindungsarme zur Positionierung und/oder Orientierung des Stabkörpers in ihrer Länge verschoben. Dadurch wird die wirksame Länge bzw. der Abstand zwischen ihren Verbindungsstellen zwischen dem Stabkörper und den in Gestellteilen vorgesehenen Antrieben verändert.

Der Erfindung liegt die Aufgabe zugrunde, die gattungsgemäße Vorrichtung so auszubilden, daß ein großer Winkel bei der Orientierungsänderung mit hoher Genauigkeit möglich ist.

Diese Aufgabe wird bei der gattungsgemäßen Vorrichtung erfindungsgemäß mit den kennzeichnenden Merkmalen des Anspruches 1 gelöst.

Bei der erfindungsgemäßen Vorrichtung ist der Körper stabförmig ausgebildet. Sein einer Endpunkt dient zur Positionierung des Stabkörpers im Raum. Der andere Endpunkt des Stabkörpers bestimmt in Verbindung mit dem ersten Endpunkt die Orientierung des Stabkörpers im Raum. Beide Endpunkte des Stabkörpers werden durch die Verbindungsarme eingestellt.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in schematischer Darstellung eine erfindungsgemäße Vorrichtung,
- Fig. 2: in schematischer Darstellung eine als Doppelschere ausgebildete Basiskinematik einer erfindungsgemäßen Vorrichtung,
- Fig. 3 bis Fig. 10: in schematischen Darstellungen jeweils weitere Ausführungsbeispiele von erfindungsgemäßen Vorrichtungen,
- Fig. 11: in schematischer Darstellung einen Teil einer weiteren Ausführungsform einer erfindungsgemäßen Vorrichtung,
- Fig. 12a bis Fig. 12d: jeweils in schematischer Darstellung weitere Ausführungsformen von erfindungsgemäßen Vorrichtungen,
- Fig. 12e: ein praktisches Ausführungsbeispiel einer Vorrichtung gemäß Fig. 12a,
- Fig. 13 bis Fig. 15: jeweils in schematischen Darstellungen weitere Ausführungsformen von erfindungsgemäßen Vorrichtungen,
- Fig. 16: ein weiteres praktisches Ausführungsbeispiel einer erfindungsgemäßen Vorrichtung,
- Fig. 17: ein weiteres praktisches Ausführungsbeispiel einer erfindungsgemäßen Vorrichtung,
- Fig. 18 und Fig. 19: Gestellmodule zum Aufbau des Gestelles der erfindungsgemäßen Vorrichtung.

Mit den im folgenden beschriebenen Vorrichtungen können räumliche Maschinenkinematiken gestaltet werden, um einen Körper in maximal sechs Freiheitsgraden im Raum zu bewegen. Der Körper kann als Werkzeug- oder als Werkstückträger einer Werkzeugmaschine dienen. Der Körper ist stabförmig ausgebildet und wird in Position und Orientierung über zwei Endpunkte im Raum definiert, deren Abstand durch ein Verbindungselement fixiert ist und die sich durch Verbindungsarme einzeln im Raum positionieren lassen. Die kinematischen Anordnungen haben jeweils drei Freiheitsgrade. Das Gesamtantriebssystem kann aus zwei oder mehreren kinematischen Anordnungen mit jeweils drei Freiheitsgraden bestehen. Diese kinematischen Anordnungen werden im folgenden als Basiskinematiken bezeichnet. Der Freiheitsgrad kann passiv sein, d.h. er kann durch ein Dreh- oder durch ein Schubgelenk gebildet werden. Der Freiheitsgrad kann aber auch aktiv ausgebildet sein, d.h. er kann durch ein motorisch betriebenes Dreh- oder Schubgelenk verwirklicht werden. Jede der Basiskinematiken ist mit mindestens einem aktiven Gelenk und mindestens einem Armteil ausgestattet.

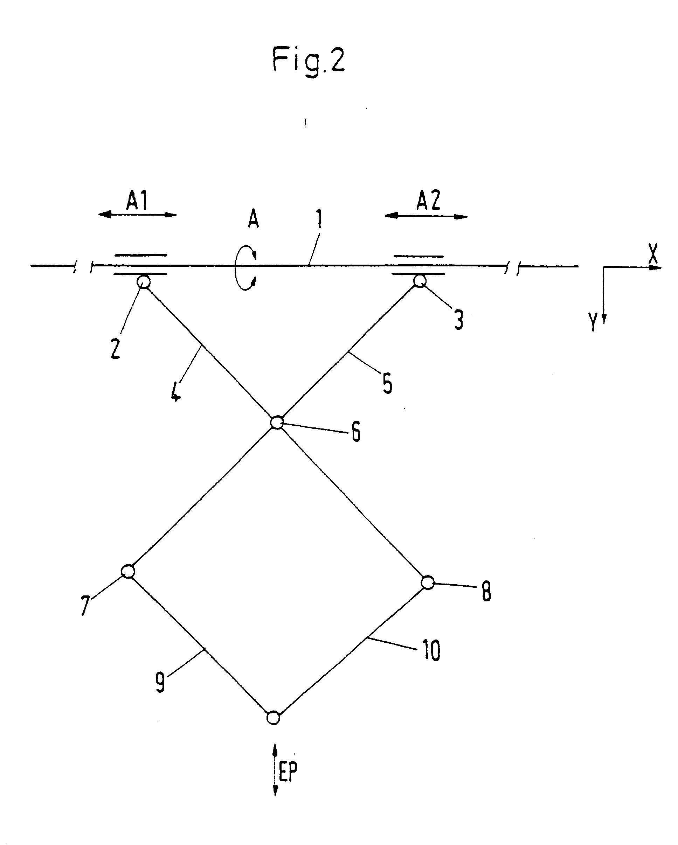

Fig. 2 zeigt eine Basiskinematik, die durch eine Doppelschere gebildet wird. Sie hat zwei Arme 4, 5, die im Bereich zwischen ihren Enden über ein Gelenk 6 gelenkig miteinander verbunden sind. Ein Ende der Arme 4, 5 ist über jeweils ein Drehgelenk 2, 3 mit einem Linearantrieb A1, A2 gelenkig verbunden. Sie sind auf einer Linearführung 1 verschiebbar gelagert. An den von den Linearantrieben A1, A2 abgewandten Enden sind über jeweils weitere Gelenke 7, 8 die einen Enden weiterer Arme 9, 10 angelenkt. Ihre anderen Enden sind an einem Endpunkt EP gelenkig miteinander verbunden.

Werden die Linearantriebe A1, A2 längs der Linearführung 1 gleichsinnig synchron bewegt, wird der Endpunkt EP parallel zur Bewegungsbahn verschoben. Werden die beiden Linearantriebe A1, A2 gegensinnig synchron verschoben, bewegt sich der Endpunkt EP senkrecht zur Linearführung 1. Die beiden Linearantriebe A1, A2 können auch so angesteuert werden, daß sich eine Überlagerung der Bewegung der beiden Einzelantriebe ergibt, so daß sich der Endpunkt EP in jeder beliebigen Bahn innerhalb der jeweiligen Ebene bewegen kann. Durch die Lage des Gelenkes 6 wird das Hebelverhältnis der Arme 4, 5 bestimmt, so daß auf einfache Weise die Hebelverhältnisse an den vorgesehenen Einsatzfall angepaßt werden können.

Ein wesentlicher Vorteil dieser Scherenkinematik besteht darin, daß jeweils ein Führungspaar, nämlich ein Meßsystem und ein Grundgestell, für beide Antriebseinheiten A1, A2 verwendet werden kann. Dadurch reduzieren sich die Fertigungs-, Justage- und Inbetriebnahmekosten.

Die Scherenkinematik ist mit einem weiteren, rotatorischen Freiheitsgrad A versehen, wodurch sich eine Basiskinematik ergibt, die drei Freiheitsgrade aufweist. Dadurch kann der Endpunkt EP jeden Punkt im Raum einnehmen. Die Rotation A kann über ein aktives oder ein passives Gelenk erfolgen. Eine solche Basiskinematik wird über den Endpunkt EP um eine weitere Basiskinematik ergänzt.

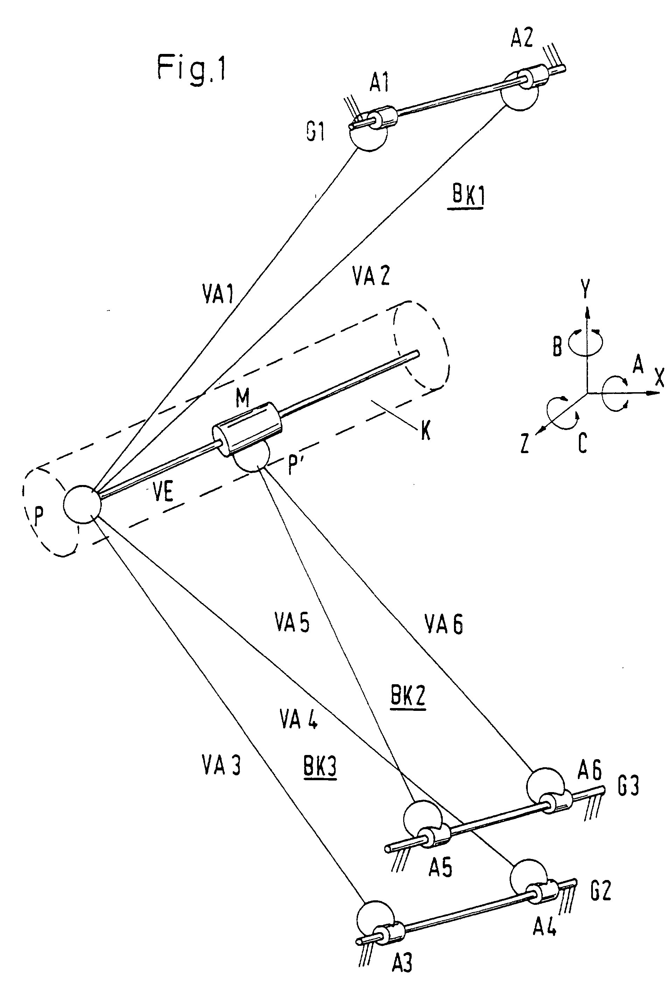

Die Vorrichtung gemäß Fig. 1 hat Linearführungen G1 bis G3, die parallel zueinander liegen. Die Linearführungen G1 bis G3 können Gestellbahnen sein und sind Bestandteile dreier Basiskinematiken BK1 bis BK3, die jeweils gleich ausgebildet sind. Auf den Linearführungen G1 bis G3 sind jeweils zwei Linearantriebe A1, A2 bzw. A3, A4 bzw. A5, A6 verfahrbar. Diese Linearantriebe mit den Linearführungen sind Bestandteile der drei Basiskinematiken BK1 bis BK3. Sie haben jeweils zwei Arme VA1, VA2 bzw. VA3, VA4 bzw. VA5, VA6. Die Arme VA1, VA2 der Basiskinematik BK1 sind mit einem Ende an einem Punkt P angelenkt. Auch die einen Enden der Arme VA3, VA4 der Basiskinematik BK3 sind am Punkt P angelenkt. Die anderen Enden dieser Arme VA1, VA2 bzw. VA3, VA4 sind gelenkig mit den Linearantrieben A1, A2 bzw. A3, A4 verbunden, die auf den Linearführungen G1 bzw. G2 verfahrbar sind. Die Arme VA5, VA6 der Basiskinematik BK2 sind mit einem Ende an einen Definitionspunkt P' und mit ihrem anderen Ende an die Linearantriebe A5 bzw. A6 angelenkt. Der Definitionspunkt P' ist an einem Antrieb M vorgesehen, der über ein Verbindungselement VE mit dem Punkt P verbunden ist. Die beiden Basiskinematiken BK2 und BK3 liegen auf der einen und die Basiskinematik BK1 auf der anderen Seite des Verbindungselementes VE. Mit dem Motor M kann der Abstand zwischen den beiden Punkten P und P' verändert werden.

Die Linearantriebe A1 bis A6 sind auf den in X-Richtung sich erstreckenden Linearführungen G1 bis G3 verfahrbar und können um deren Achsen drehen. Die Linearführungen G2 und G3 haben nur geringen Abstand voneinander.

Die drei Basiskinematiken BK1 bis BK3 sind jeweils als Einfachscheren ausgebildet, welche die Linearantriebe A1 bis A6 und die zugehörigen gestellfesten Linearführungen G1 bis G3 aufweisen. Die beiden Anlenkpunkte P und P' sowie das Verbindungselement VE bilden einen stabförmigen Körper K, der als Werkzeug- oder Werkstückträger dienen kann. Die Linearantriebe A1 bis A6 sind jeweils längs der Linearführungen G1 bis G3 verschiebbar und zusätzlich um deren Achsen drehbar. Durch entsprechende Ansteuerung der Linearantriebe A1 bis A6 kann der Körper K in jede gewünschte räumliche Lage eingestellt werden. Mit den Linearantrieben A1 bis A6 kann der Körper K definiert in den drei Achskoordinaten X, Y, Z sowie der Orientierung A, B, C gesteuert werden.

Da der Punkt P' am Antrieb M vorgesehen ist, kann der Abstand zwischen den beiden Punkten P und P' des Körpers K motorisch variiert werden. Durch diese Abstandsänderung zwischen den beiden Punkten P und P' steht ein zusätzlicher Freiheitsgrad zur Eigenschaftsveränderung der Kinematik zur Verfügung. Der Antrieb M kann als Linearantrieb oder als Spindel-Mutter-Antrieb ausgebildet sein. Der Motor kann hierbei elektrisch, hydraulisch, pneumatisch und dergleichen ausgeführt sein.

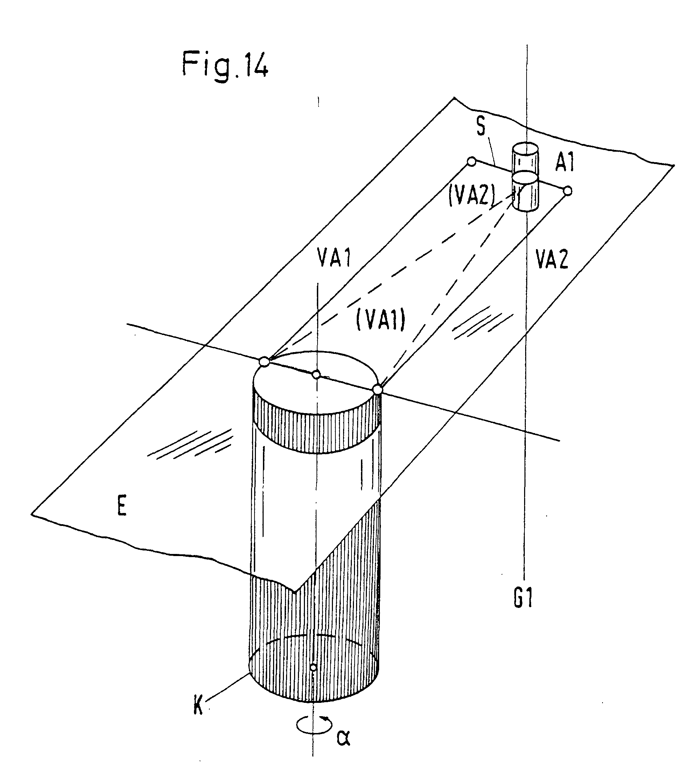

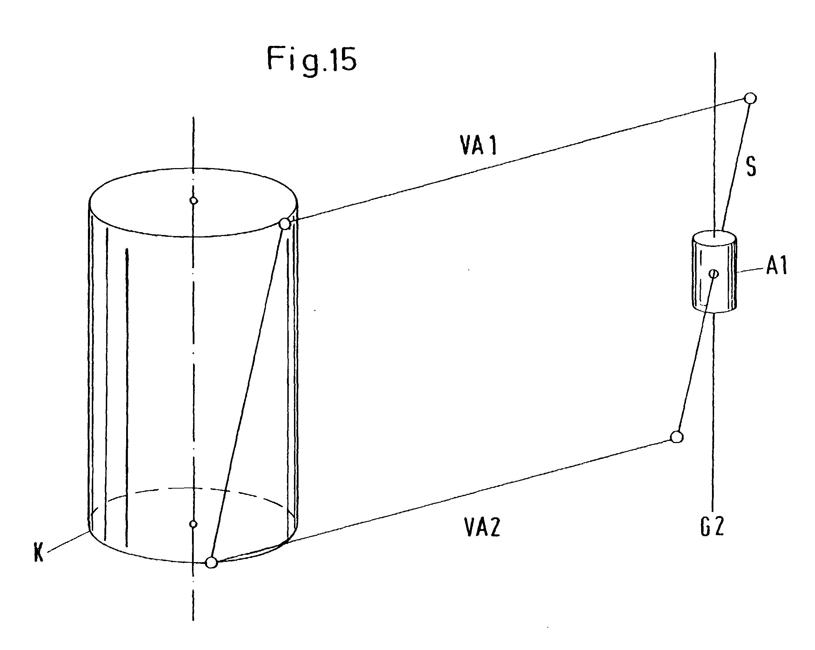

Mit den Linearantrieben A1 bis A4 läßt sich der Punkt P über die Verbindungsarme VA1 bis VA4, deren Fußpunkte über die Antriebe A1 bis A4 ortsunveränderlich auf den Linearführungen G1 und G2 angeordnet sind, beliebig im Arbeitsraum verschieben. Mit Hilfe der Arme VA5, VA6, deren Fußpunkte über die Antriebe A5, A6 ortsunveränderlich auf der Linearführung G3 angeordnet sind, läßt sich auch der Punkt P' im Raum verschieben, so daß sich die Orientierung des Verbindungselementes VE und damit des Körpers K in zwei Freiheitsgraden verändern läßt. Der dritte Orientierungsfreiheitsgrad bleibt undefiniert und muß darum mittels einer Verdrehungssicherung fixiert werden, wie dies anhand der Fig. 14 und 15 noch erläutert werden soll. Mit dem Motor M kann der Abstand zwischen den beiden Punkten P und P' verändert werden, so daß hiermit ein weiterer Freiheitsgrad zur Beeinflussung der Orientierung des Körpers K im Raum besteht.

Zur Bestimmung des Punktes P genügen die Verbindungsarme VA1, VA2 und VA3. Der Verbindungsarm VA4 führt zu einer symmetrischen Anordnung und kann aus Belastungsgründen (statisch, dynamisch) unter Umständen vorteilhaft sein. Zudem gestattet die Anordnung der dreieckförmigen Basiskinematiken BK1 und BK3 die Anwendung von Doppelscheren entsprechend Fig. 2, um die Verschiebewege für die Antriebe A1, A2 für die Y-Achse zu verkürzen. Anstelle der Doppelschere können auch Mehrfachscheren bei der beschriebenen Vorrichtung eingesetzt werden.

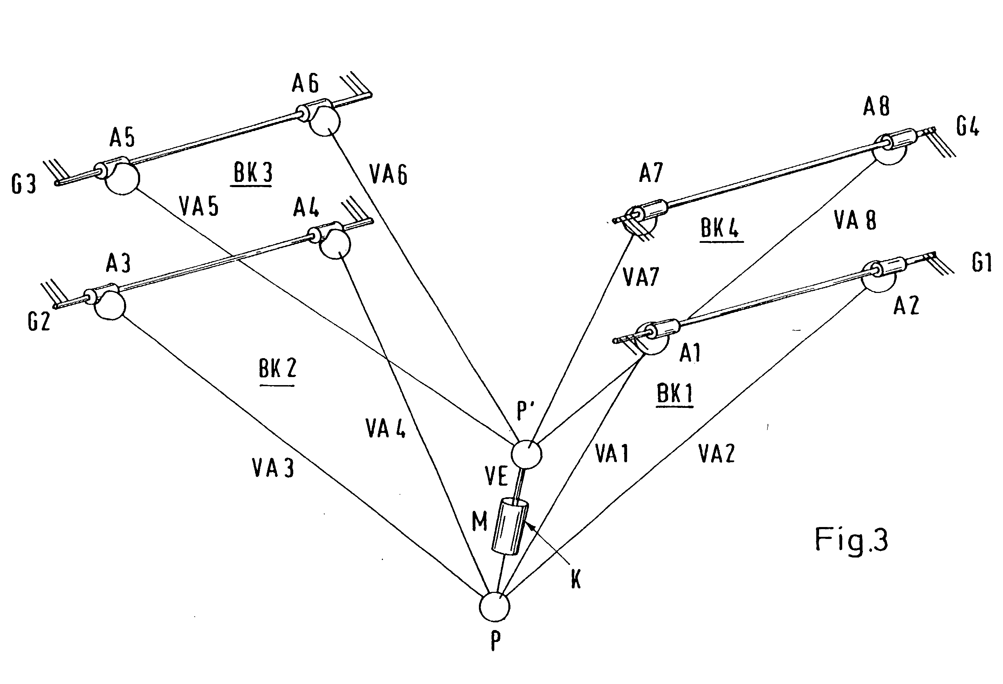

Wird der Endpunkt P' unabhängig vom Punkt P und vom Verbindungselement VE in drei Freiheitsgraden geführt, d.h. genau in der gleichen Weise wie der Punkt P, so entstehen zwei feststehende Raumpunkte P und P', die sich mittels des längenveränderlichen Verbindungselementes VE vorspannen lassen. Eine solche Ausführungsform zeigt Fig. 3. Hier erfolgt die Längenveränderung des Verbindungselementes VE mittels des Motors M. Bei diesem Ausführungsbeispiel wird durch Hinzufügen einer zusätzlichen Linearführung G4 und Hintereinanderschalten zweier gleichartiger Systeme mit den Linearführungen G1, G2 und G3, G4 eine vorteilhafte symmetrische Anordnung erreicht. Die Vorrichtung hat somit vier Basiskinematiken BK1 bis BK4. Die Linearführungen G1 bis G4 liegen in Z-Richtung und sind gestellfest angeordnet. Auf jeder Linearführung sitzen jeweils zwei Linearantriebe A1 bis A8. Die Arme VA1, VA2 der Basiskinematik BK1 sind an dem Punkt P des Körpers K angelenkt. Auch die Arme VA3, VA4 der Basiskinematik BK2 sind am Punkt P mit ihren Enden angelenkt. Die Arme VA5, VA6 und VA7, VA8 der beiden anderen Basiskinematiken BK3 und BK4 sind an den Punkt P' angelenkt. Er ist über das Verbindungselement VE mit dem Punkt P verbunden. Mittels des Antriebes M kann der Abstand zwischen den beiden Punkten P, P' des Körpers K variiert werden. Die Linearantriebe A1 bis A8 sind längs ihrer Linearführungen G1 bis G4 verschiebbar und um deren Achsen auch drehbar. Somit kann der stabförmige Körper K durch individuelle Ansteuerung der Antriebe A1 bis A6 definiert in den drei Achskoordinaten X, Y, Z sowie in den Drehrichtungen A, B, C gesteuert werden. Durch steuerungstechnische Maßnahmen läßt sich der Punkt P' so einstellen, daß die Arme der Basiskinematiken BK1 und BK2 auf Zug und die Arme der Basiskinematiken BK3 und BK4 auf Druck beansprucht werden und so eine Vorspannung im Gesamtsystem erzeugt wird.

Es ist auch möglich, die Linearführungen G1, G2 und G3, G4 hintereinanderzuschalten. An der grundsätzlichen Arbeitsweise dieser Vorrichtung ändert sich dadurch nichts.

Zur Vorspannung sämtlicher Verbindungsarme VA1 bis VA8 wird nur ein einziges Vorspannelement M benötigt.

Bei den beschriebenen Ausführungsbeispielen werden die Basiskinematiken jeweils durch Einfachscheren gebildet. Grundsätzlich können die Basiskinematiken auch durch Doppelscheren entsprechend Fig. 2 gebildet werden. Dies gilt auch für die nachfolgend noch beschriebenen weiteren Ausführungsbeispiele.

Es können aber auch beliebige Kombinationen mit Basiskinematiken in Kugel- und Zylinderkoordinatensystemen gebildet werden.

Wegen der Vielzahl der Freiheitsgrade durch mehrere beteiligte Basiskinematiken mit drei Freiheitsgraden, die nur zum Teil steuerbar sind, entstehen auch Kombinationen, bei denen der Körper K bzw. sein Punkt P nicht in allen Freiheitsgraden definiert ist, d.h. durch Steuerung nicht beeinflußbar ist. Diese undefinierten Freiheitsgrade müssen durch konstruktive Lösungen gesperrt werden.

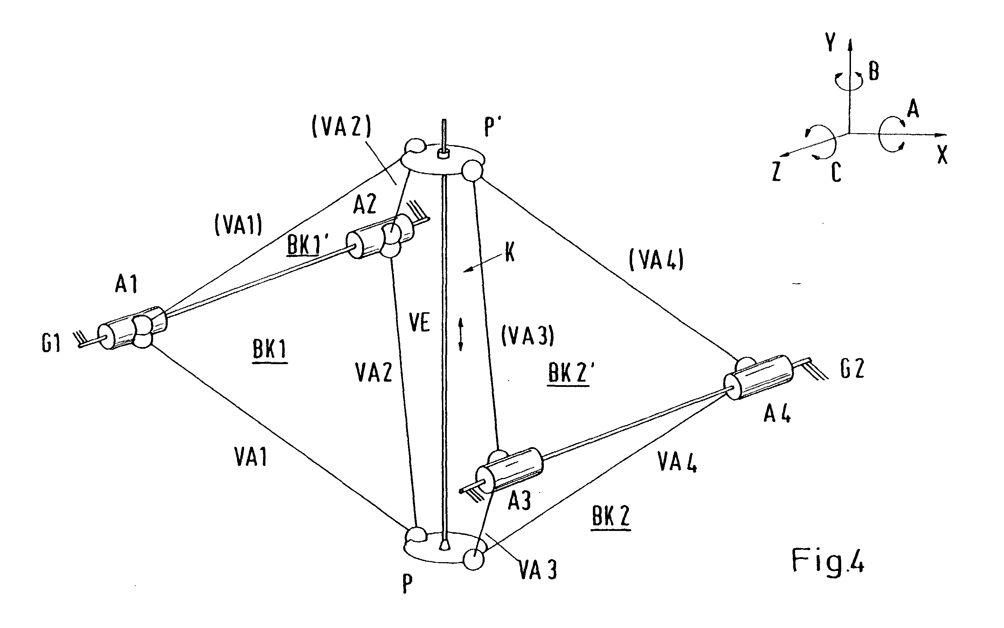

Fig. 4 zeigt eine Ausführungsform mit vier Basiskinematiken BK1, BK1' und BK2, BK2'. Die Vorrichtung hat die beiden Linearführungen G1 und G2, auf denen jeweils zwei Linearantriebe A1, A2 und A3, A4 verschiebbar sind. Die Linearantriebe A1, A2 sind über die Arme VA1, VA2 gelenkig mit dem Punkt P und über weitere, spiegelbildlich hierzu angeordnete Arme (VA1), (VA2) gelenkig mit dem weiteren Punkt P' des Körpers K verbunden. In gleicher Weise sind die Linearantriebe A3, A4 über die Arme VA3, VA4 gelenkig mit dem Punkt P und über die Arme (VA3), (VA4) gelenkig mit dem Punkt P' verbunden. Das Verbindungselement VE ist fest mit dem Punkt P verbunden, während der Punkt P' auf dem Verbindungselement VE in dessen Längsrichtung verschiebbar ist. Jeder gestellfesten Linearführung G1 und G2 sind auf die beschriebene Weise zwei Basiskinematiken BK1, BK1' und BK2, BK2' zugeordnet, die jeweils als Einfachscheren ausgebildet sind. Durch Ansteuerung der Linearantriebe A1 bis A4 läßt sich der Punkt P' relativ zum Punkt P längs des Verbindungselementes VE gezielt verstellen. Hierbei wird eine Drehung in Richtung A, B verhindert. Lediglich eine Drehung um die Z-Achse in Richtung C ist möglich. Auch bei dieser Ausführungsform bestimmt der eine Endpunkt P des Körpers K die Position im Raum, während der andere Punkt P' in Verbindung mit dem ersten Punkt P die Orientierung des Körpers K bestimmt. Die Verbindungsarme dienen auch bei diesem Ausführungsbeispiel zur Einstellung der beiden Punkte P, P'.

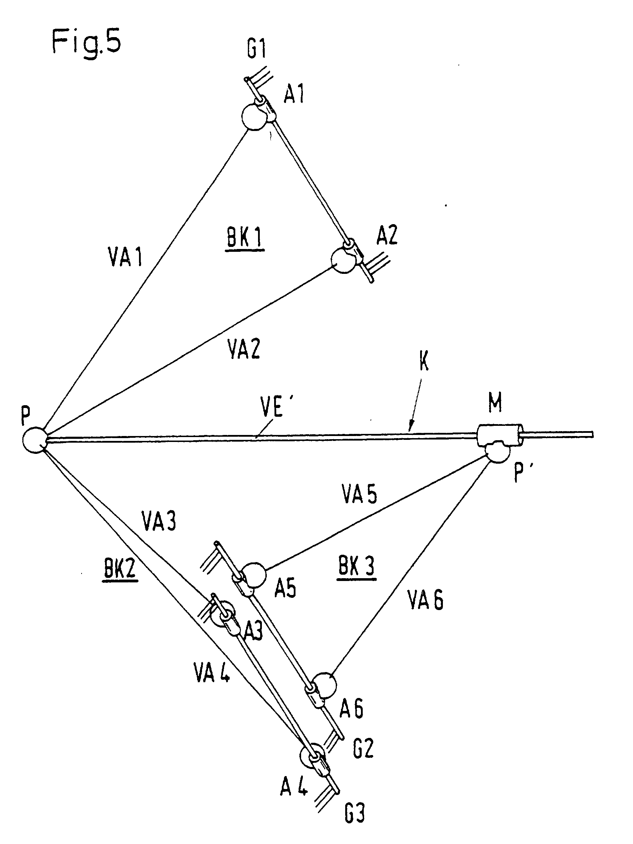

Bei der Ausführungsform gemäß Fig. 5 sind drei gestellfeste Linearführungen G1 bis G3 vorgesehen, auf denen jeweils zwei Linearantriebe A1 bis A6 verschiebbar gelagert sind. Die Linearantriebe A1, A2 sind über die Verbindungsarme VA1, VA2 gelenkig mit dem Punkt P des Körpers K verbunden. Auch die Linearantriebe A3, A4 sind über die Verbindungsarme VA3, VA4 gelenkig mit dem Punkt P verbunden. Die Linearantriebe A5, A6 sind über die Verbindungsarme VA5, VA6 mit dem Punkt P' des Körpers K gelenkig verbunden. Der Punkt P' ist am Antrieb M vorgesehen, der längs des Verbindungselementes VE' verfahrbar ist. Durch den Antrieb M kann der Abstand zwischen den beiden Punkten P und P' aktiv geändert werden. Infolge der motorischen Anpassung der Länge des Verbindungselementes VE' ist eine Änderung der Orientierung des Körpers K möglich. Die Arme der Basiskinematiken BK1 bis BK3 können außerdem durch Veränderung des Abstandes zwischen den Punkten P und P' unter Spannung gesetzt werden.

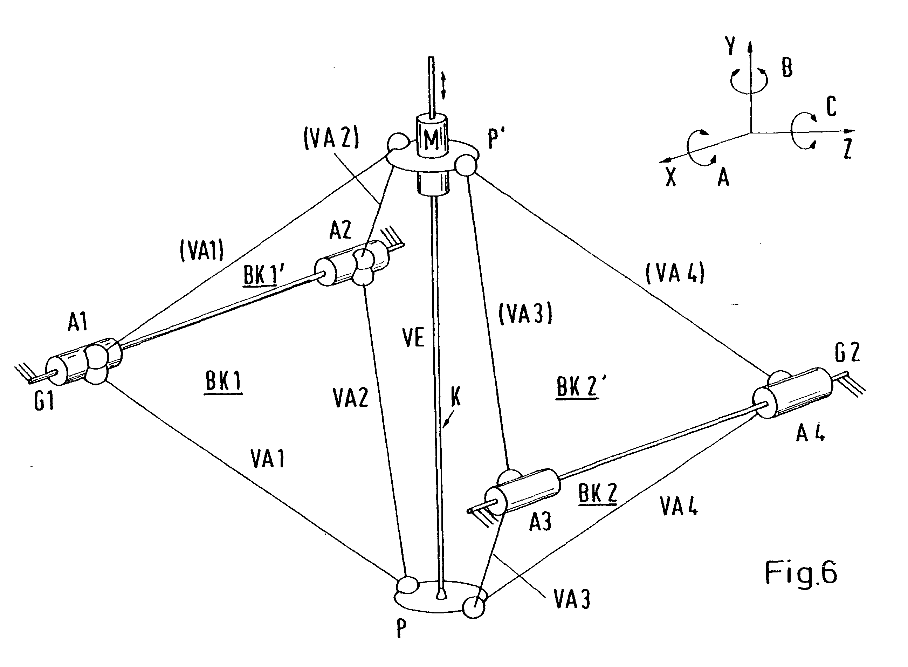

Die Vorrichtung gemäß Fig. 6 hat vier Basiskinematiken BK1, BK1' und BK2, BK2', die jeweils durch Einfachscheren gebildet sind. Die Basiskinematiken BK1 und BK1' bzw. BK2, BK2' sind jeweils spiegelbildlich in bezug auf in X-Richtung liegenden Linearführungen G1, G2 angeordnet. Die Vorrichtung ist so ausgebildet, daß die Drehachsen B, C blockiert sind. Die Verbindungsarme VA1, VA2 der Basiskinematik BK1 verbinden die Linearantriebe A1, A2 gelenkig mit dem Punkt P des Körpers K. Die Arme (VA1), (VA2) der spiegelbildlich angeordneten Basiskinematik BK1' verbinden die Linearantriebe A1, A2 gelenkig mit dem Punkt P' des Körpers K. In gleicher Weise sind die Arme VA3, VA4 der Basiskinematik BK2 bzw. die Arme (VA3), (VA4) der Basiskinematik BK2' gelenkig mit den Linearantrieben A3, A4 und dem Punkt P bzw. dem Punkt P' verbunden. Jeweils zwei Linearantriebe A1, A2 und A3, A4 sind auf den gestellfesten Linearführungen G1 und G2 verfahrbar. Der Punkt P ist über das Verbindungselement VE mit dem Punkt P' verbunden. Das Verbindungselement VE ist mit einem Ende fest mit dem Punkt P verbunden, während der Punkt P' auf dem Verbindungselement VE in dessen Längsrichtung verschiebbar ist. Der Punkt P' ist mit dem Antrieb M versehen, mit dem der Punkt P' aktiv auf dem Verbindungselement VE verschoben werden kann. Durch Verstellen des Punktes P' mittels des Antriebes M ist eine Vorspannung sämtlicher Arme der Basiskinematiken BK1, BK1', BK2, BK2' auf Zug möglich. Die Basiskinematiken BK1, BK1' und BK2, BK2' sind auf einander gegenüberliegenden Seiten des Verbindungselementes VE angeordnet. Am Körper K ist wie bei den vorigen Ausführungsbeispielen ein entsprechendes Werkzeug oder ein Werkstück angeordnet. Die Basiskinematiken sind wiederum als Einfachscheren ausgebildet.

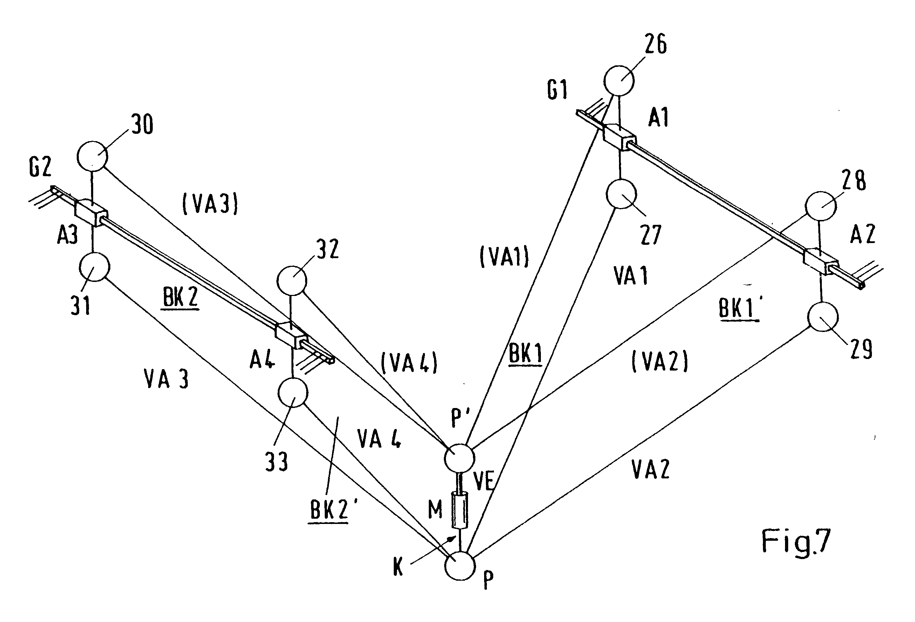

Fig. 7 zeigt eine Vorrichtung, die als Basiskinematiken Parallelogrammanordnungen aufweist. Mit ihnen können Freiheitsgrade, die nicht durch aktive Gelenke definiert sind, gesperrt werden. Die Vorrichtung hat die beiden gestellfesten Linearführungen G1, G2, auf denen die Linearantriebe A1, A2 und A3, A4 verfahrbar sind. Die beiden Linearführungen G1, G2 erstrecken sich in Z-Richtung. Jedem Linearantrieb A1 bis A4 sind jeweils zwei Gelenkpunkte 26, 27; 28, 29; 30, 31; 32, 33 zugeordnet. An den Gelenkpunkten 26, 27 des Linearantriebes A1 sind die Arme VA1, (VA1) angelenkt, deren andere Enden mit den beiden Punkten P, P' des Körpers K gelenkig verbunden sind.

An den Gelenken 28, 29 des Linearantriebes A2 sind die Arme VA2, (VA2) mit ihrem einen Ende angelenkt. Ihre anderen Enden sind gelenkig mit den Punkten P und P' verbunden.

Die beiden Punkte P und P' sind durch das Verbindungselement VE miteinander verbunden, dessen Länge durch den Antrieb M verändert werden kann.

Der Punkt P' ist über die Arme (VA3), (VA4) gelenkig mit den Gelenken 30 und 32 der Linearantriebe A3 und A4 verbunden. In gleicher Weise ist der Endpunkt P des Stabkörpers K über die Arme VA3, VA4 gelenkig mit den Gelenkpunkten 31 und 33 der Linearantriebe A3 und A4 verbunden. Die Linearführungen G1 und G2 liegen auf einander gegenüberliegenden Seiten des Stabkörpers K sowie parallel zueinander.

Die Arme VA1, (VA1) sind Teil einer Basiskinematik BK1. In gleicher Weise sind die parallel zueinander liegenden Arme VA2, (VA2) bzw. VA3, (VA3) bzw. VA4, (VA4) Teil weiterer Basiskinematiken BK1' bzw. BK2 bzw. BK2'.

Die eine Seite der parallelogrammförmigen Basiskinematiken wird durch den Stabkörper K gebildet. Die Basiskinematiken bilden mit ihren Verbindungselementen ein Stabfachwerk, das über das Verbindungselement VE mittels des Antriebes M, der beispielsweise ein Druckzylinder sein kann, so vorgespannt werden kann, daß die Arme VA2 und VA4 auf Zug und die Arme VA1 und VA3 auf Druck vorgespannt werden können, ohne daß Kräfte auf die Linearantriebe A1 bis A4 ausgeübt werden. Über die Vorspannung durch den Druckzylinder im Verbindungselement VE kann die Steifigkeit des Systems beeinflußt sowie das Spiel der Lager eliminiert werden. Die Vorrichtung kann auch für Systeme mit fünf oder mehr Freiheitsgraden eingesetzt werden. Aufgrund der Parallelogrammanordnung ergibt sich eine Sperrung der Orientierungsfreiheitsgrade bei erhaltener Möglichkeit der Gelenkvorspannung.

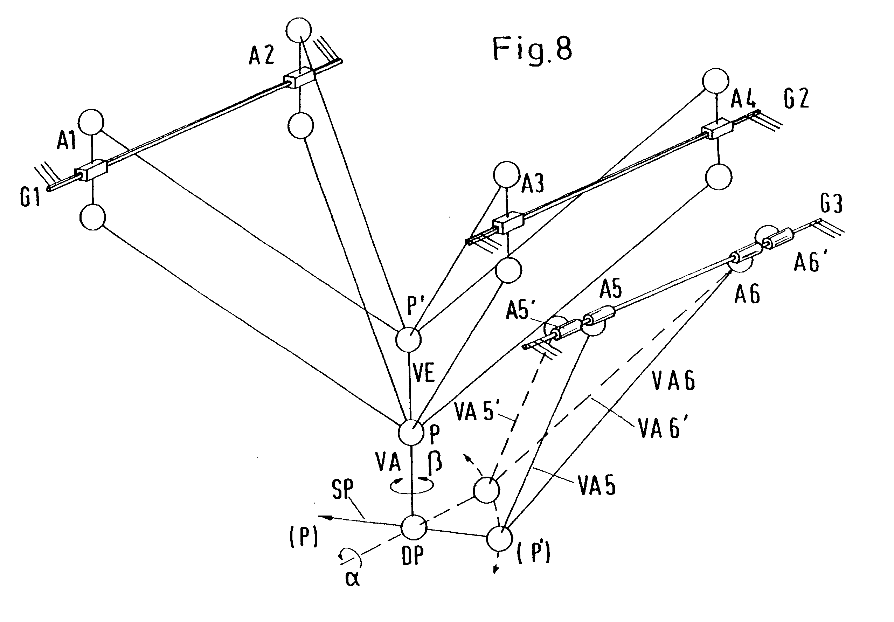

Die Vorrichtung gemäß Fig. 8 unterscheidet sich von der Vorrichtung gemäß Fig. 7 dadurch, daß das Verbindungselement VE nach außen um ein Element VA verlängert ist. Es nimmt über ein Drehgelenk DP ein Spindelelement SP auf, welches um das Drehgelenk DP in Richtung des gestrichelten Doppelpfeiles verschwenkt werden kann. Ein Endpunkt (P') des Spindelelementes SP ist über ein Scherenelement mit den Linearantrieben A5, A6 gelenkig verbunden, die verschiebbar auf der gestellfesten Linearführung G3 angeordnet sind. Die Verbindung erfolgt über die Arme VA5, VA6. Mit ausgezogenen Linien ist die eine Stellung des Endpunktes (P') des Spindelelementes SP dargestellt. Durch Verfahren der Linearantriebe A5, A6 entgegengesetzt zueinander in die Stellungen A5' und A6' längs der Linearführung G3 wird der Endpunkt (P') in Richtung des gestrichelten Pfeiles um das Drehgelenk DP geschwenkt. In dieser verschwenkten Lage nehmen die Verbindungsarme die Positionen VA5', VA6' ein. Die Länge des Verbindungselementes VE kann, abweichend vom dargestellten Ausführungsbeispiel, mit einem Antrieb verändert werden, wie es anhand des vorigen Ausführungsbeispieles erläutert worden ist. Im übrigen ist diese Ausführungsform gleich ausgebildet wie das Ausführungsbeispiel gemäß Fig. 7.

Die Linearantriebe G1 bis G3 liegen parallel zueinander. Über die Verbindungsarme VA5, VA6 sowie deren Antriebe A5 und A6 kann der Endpunkt (P') des Spindelelementes SP in der beschriebenen Weise um den Drehpunkt DP und damit die Orientierung des Spindelelementes SP in den zwei Freiheitsgraden α, β verändert werden. Bei dieser Verstellung des Spindelelementes SP werden die Linearantriebe A5, A6 um die Achse der Linearführung G3 gedreht.

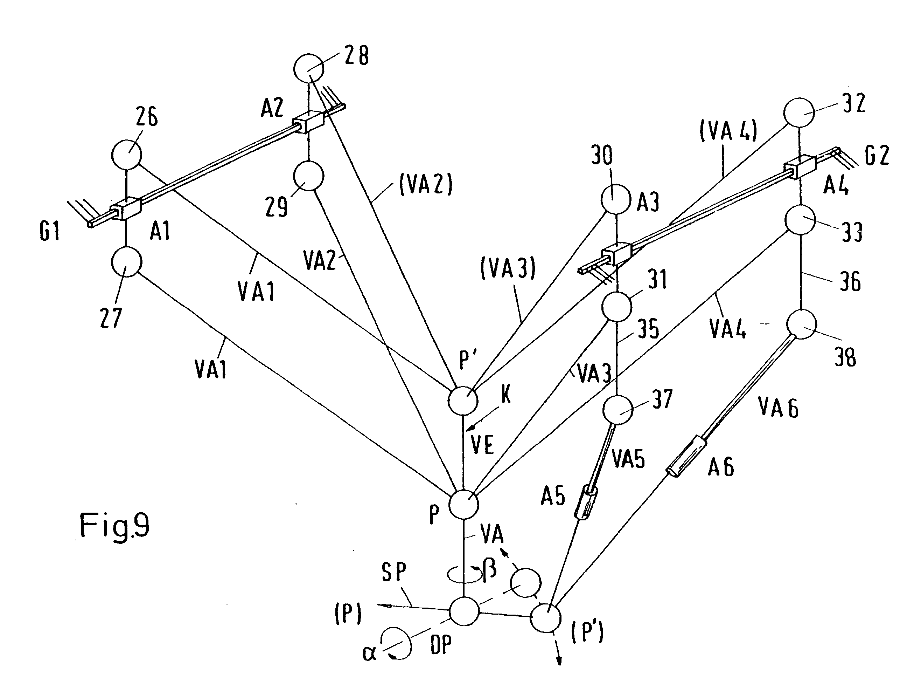

Bei der Ausführungsform gemäß Fig. 9 sind die Verbindungsarme VA5, VA6 motorisch mittels zweier Antriebe A5, A6 längenveränderlich. Durch Variation der Armlänge kann somit der Endpunkt (P') des Spindelelementes SP in seiner Orientierung eingestellt werden. Die Linearantriebe A1 bis A4, die paarweise auf den gestellfesten Linearführungen G1, G2 angeordnet sind, haben die Gelenkpunkte 26 bis 33. Wie bei den Ausführungsformen nach den Fig. 7 und 8 sind jedem Linearantrieb zwei Gelenkpunkte zugeordnet, die auf einander gegenüberliegenden Seiten des jeweiligen Linearantriebes mit Abstand zu ihm angeordnet sind. Der Stabkörper K hat wiederum die Punkte P und P', die durch das Verbindungselement VE miteinander verbunden sind. Die Verbindungsarme VA1 bis VA4 verbinden die Gelenke 27, 29, 31, 33 gelenkig mit dem Punkt P des Stabkörpers K. Der Punkt P' des Körpers K ist über die Verbindungsarme (VA1) bis (VA4) gelenkig mit den Gelenken 26, 28, 30, 32 verbunden. Die Verbindungsarme sind wiederum Teil von Parallelogrammanordnungen, die als gemeinsame Parallelogrammseite den Stabkörper K haben.

Die Gelenkpunkte 31 und 33 der Linearantriebe A3, A4 sind über Arme 35, 36 mit Knotenpunkten 37, 38 gelenkig verbunden, welche über die längenveränderbaren Arme VA5, VA6 mit dem Endpunkt (P') des Spindelelementes SP gelenkig verbunden sind. Wie beim vorigen Ausführungsbeispiel ist das Verbindungselement VE um das Element VA nach außen verlängert. Über dieses Element VA ist der Endpunkt P mit dem Drehgelenk DP gekuppelt.

Diese Vorrichtung mit der Außenlage des Elementes VA und damit einem außen liegenden Drehpunkt DP führt zu einer sehr hohen Raumfreiheit zur Veränderung der Orientierung. Die einzelnen Linearantriebe können unabhängig voneinander angesteuert werden, so daß eine optimale Einstellung im Raum gewährleistet ist. Der Endpunkt (P') des Spindelelementes SP wird durch Längenveränderung der Verbindungsarme VA5, VA6 mittels der Motoren A5, A6 bewirkt. Die Fußpunkte der Verbindungsarme VA5, VA6 sind gelenkig, jedoch ortsfest mit den Antrieben A3, A4 des Positioniersystems für das Verbindungselement VE verbunden. In Fig. 9 ist mit gestrichelten Linien eine verdrehte Lage des Spindelelementes SP dargestellt, die durch eine entsprechende motorische Längenveränderung der Verbindungsarme VA5, VA6 erreicht wird.

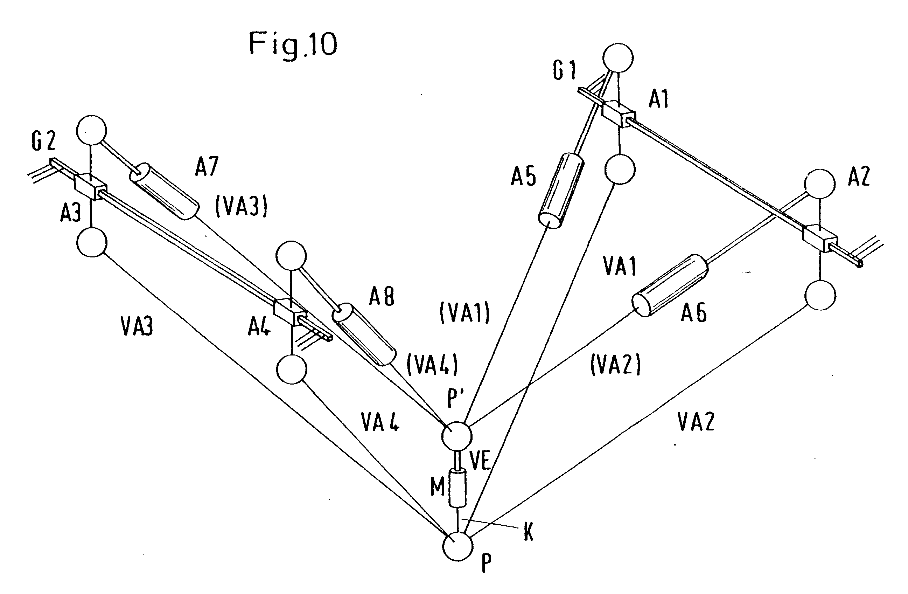

Die Vorrichtung gemäß Fig. 10 entspricht grundsätzlich dem Ausführungsbeispiel gemäß Fig. 7. Unterschiedlich ist lediglich, daß die Verbindungsarme (VA1) bis (VA4) über jeweils einen Motor A5 bis A8 längenveränderlich ausgebildet sind. Um die Orientierung des Verbindungselementes VE des Stabkörpers K im Raum einstellen zu können, wird durch entsprechende Längenveränderung dieser Verbindungsarme (VA1) bis (VA4) der Punkt P' in seiner Raumlage verstellt. Mit dem Antrieb M des Stabkörpers K kann in der beschriebenen Weise die Gelenkvorspannung erreicht werden.

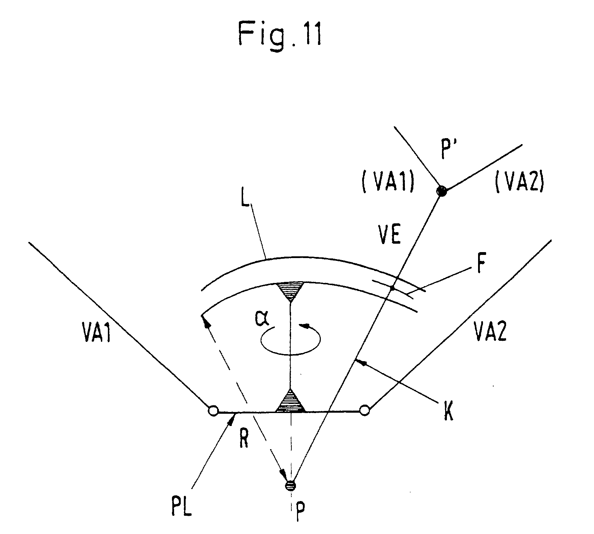

Fig. 11 zeigt eine Anordnung, die aufgrund einer besonderen Ausbildung eines Lagers L für die Führung des Verbindungselementes VE des Stabkörpers K sicherstellt, daß sich der Endpunkt P bei Veränderung der Orientierung des Verbindungselementes VE nicht verändert. Zu diesem Zweck ist die Lagerführung L auf einem Kreisbogen um den Punkt P mit dem Radius R ausgebildet. Auf dem Verbindungselement VE sitzt ein Führungselement F, das in der Lagerführung L verschiebbar ist. Beim Verschieben des Führungselementes F in der Lagerführung L ändert sich zwar die Orientierung des Verbindungselementes VE, nicht jedoch die Lage des Punktes P. Die beiden Endlagen des Verbindungselementes VE sind mit ausgezogenen und gestrichelten Linien dargestellt. Der Endpunkt P' wird mittels der Verbindungsarme (VA1) und (VA2) entsprechend der gewünschten Orientierung verstellt. Der Körper K ist mit einer Platte PL versehen, auf der die Lagerführung L gelagert ist. An der Platte PL greifen an einander gegenüberliegenden Stellen die Enden der Verbindungsarme VA1 und VA2 gelenkig an. Mit ihnen wird die Platte PL und damit auch die Lagerführung L positioniert. Darüber hinaus kann das Lagersystem L um den Winkel α gedreht werden.

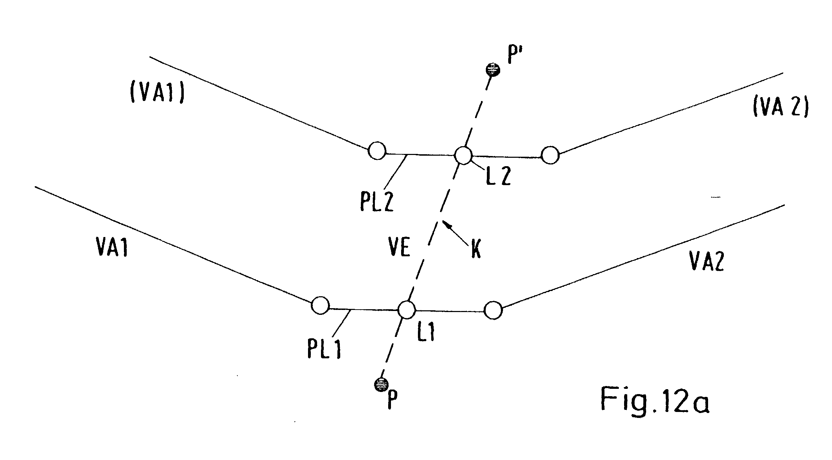

Fig. 12a zeigt eine Vorrichtung zur Veränderung der Orientierung des Verbindungselementes VE mittels einer Positionsänderung zweier Plattformen PL1 und PL2, die über ihre Verbindungsarme VA1, VA2 und (VA1), (VA2) in der Raumposition veränderbar sind. Außerdem sind die Plattformen PL1, PL2 über das Verbindungselement VE und die Lagerstellen L1, L2 gebunden. Der Stabkörper K weist die beiden Endpunkte P, P' auf. Eine der beiden Lagerstellen L1, L2 kann auch unbeweglich gehalten werden, sofern sich die entsprechende Plattform mit dem Orientierungswinkel in der Orientierung verändern läßt. Aufgrund der beschriebenen gelenkigen Verbindung der Plattformen PL1, PL2 über die Lager L1, L2 mit dem Verbindungselement VE bleiben die Plattformen PL1, PL2 stets parallel zueinander.

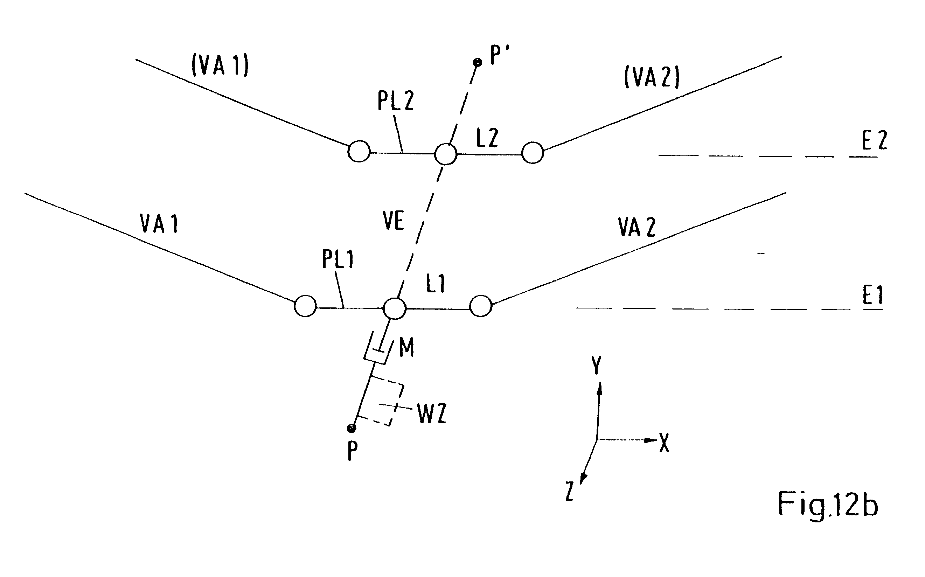

Fig. 12b zeigt eine Anordnung zur Veränderung der Orientierung des Verbindungselementes VE entsprechend dem Ausführungsbeispiel gemäß Fig. 12a, jedoch mit einer Sperrung der Freiheitsgrade für die Lagerstellen L1, L2 in Z-Richtung. Dadurch können sich die Lagerstellen L1, L2 nur in einer Ebene E1 oder E2 bewegen. Die Z-Richtung wird durch eine variable Verlängerung des Verbindungselementes VE erzeugt. Hierzu sitzt im Verbindungselement VE als Antrieb M eine Kolben-Zylinder-Anordnung, mit welcher die Längenveränderung des Verbindungselementes VE erreicht werden kann. Die Plattformen PL1 und PL2 werden durch die an sie angelenkten Verbindungsarme VA1, VA2 und (VA1), (VA2) innerhalb der Ebenen E1, E2 bewegt. Die Lage der Ebenen E1, E2 in Z-Richtung wird durch entsprechende Längenveränderung des Verbindungselementes VE erreicht.

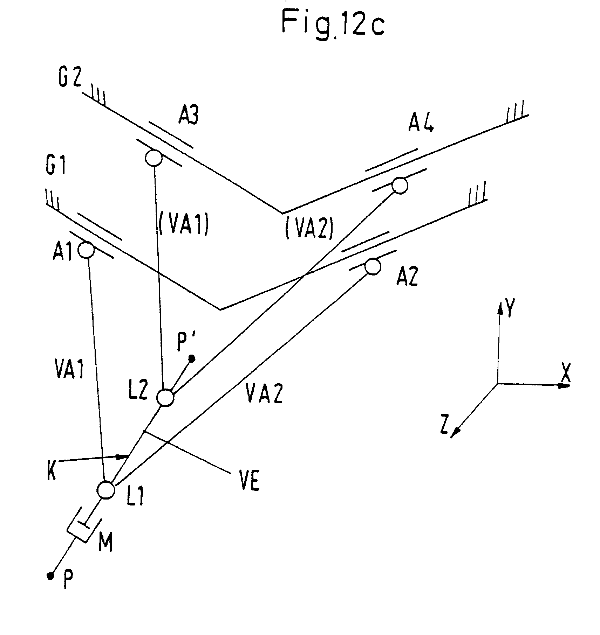

Beim Ausführungsbeispiel nach Fig. 12c sind die Plattformen L1, L2 entsprechend dem vorigen Ausführungsbeispiel über die Verbindungsarme VA1, VA2 und (VA1), (VA2) gelenkig mit den Linearantrieben A1, A2 und A3, A4 auf den gestellfesten Linearführungen G1, G2 verbunden. Das Verbindungselement VE des Stabkörpers K kann wiederum in Z-Richtung mittels des Antriebes M verändert werden. Die Verbindungsarme VA1, VA2 und (VA1), (VA2) bilden jeweils Scherenanordnungen, über welche die Lagerstellen L1 und L2 im Raum positioniert werden können. Hierzu werden die Linearantriebe A1 bis A4 in entsprechender Weise auf den Linearführungen G1, G2 verfahren. Somit kann die Orientierung des Verbindungselementes VE eingestellt werden. Der Freiheitsgrad in Z-Richtung wird mittels des Antriebes M erzeugt. Anstelle der dargestellten einfachen Scherenanordnung kann auch eine Doppelscherenanordnung entsprechend Fig. 2 verwendet werden.

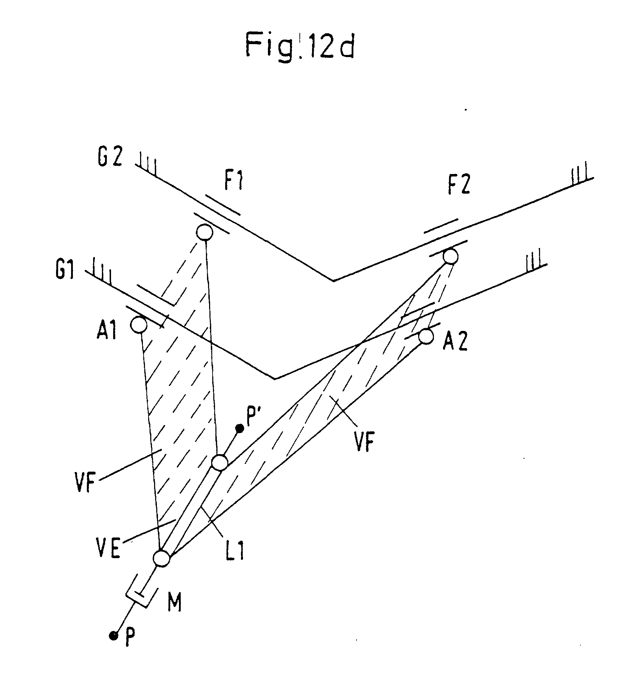

Die Vorrichtung gemäß Fig. 12d entspricht im wesentlichen dem Ausführungsbeispiel nach Fig. 12c. Im Unterschied zum vorigen Ausführungsbeispiel sind die beiden Scheren über Verbindungselemente VF mechanisch zu einer einzigen Schere zusammengekoppelt, so daß für die zweite Schere die Linearantriebe A3, A4 entfallen und durch einfache Schlitten F1, F2 ersetzt werden können. Der Antrieb erfolgt somit über die Linearantriebe A1, A2, wobei die Schlitten F1, F2 auf der Linearführung G2 in entsprechendem Maße mitgeschleppt werden. Zur Erzeugung des Freiheitsgrades in Z-Richtung dient wiederum der Antrieb M. Aufgrund der mechanischen Kopplung der beiden Scheren zu einer einzigen Schere werden auch die beiden Lagerstellen zu einer einzigen Lagerstelle L1 zusammengefaßt. Die Orientierung des Verbindungselementes VE beim Verfahren der Linearantriebe A1, A2 bleibt konstant. Dadurch hat diese Vorrichtung nur drei Freiheitsgrade.

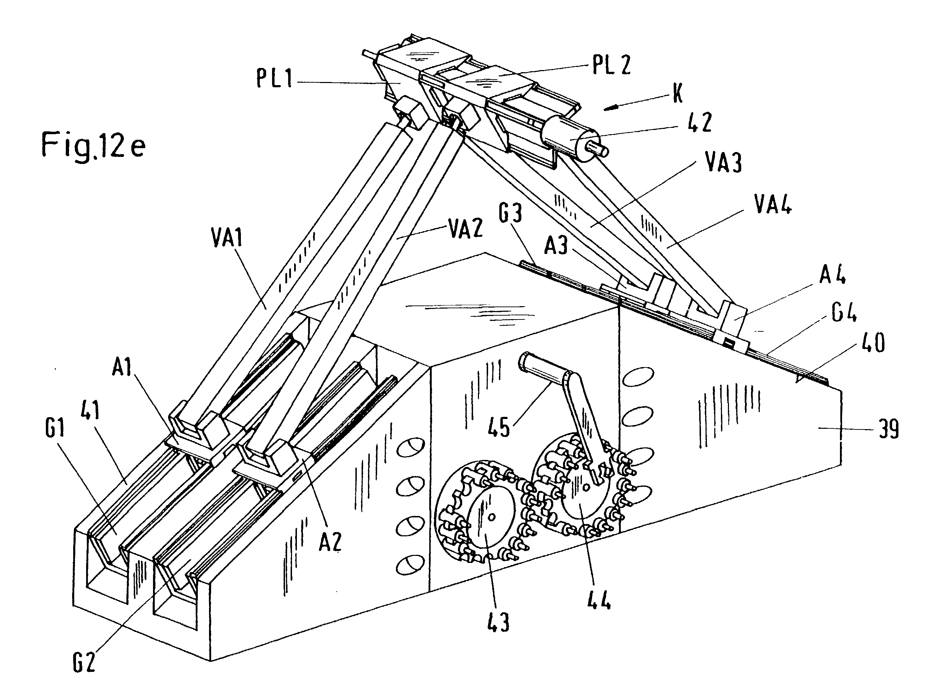

Fig. 12e zeigt ein praktisches Ausführungsbeispiel der Ausführungsform gemäß Fig. 12a. Die dargestellte Vorrichtung hat ein Maschinenbett 39 mit stumpfwinklig zueinander liegenden Gestellflächen 40 und 41. Sie sind mit den Linearführungen G1 bis G4 versehen, längs denen die Linearantriebe A1 bis A4 verfahrbar sind. An den Linearantrieben A1 bis A4 sind die einen Enden der Verbindungsarme VA1 bis VA4 angelenkt, deren andere Enden kugelgelenkig mit den Plattformen PL1 und PL2 verbunden sind. Die Verbindungsarme VA1 bis VA4 sind antriebsseitig lediglich um zueinander parallele Achsen schwenkbar, so daß die Verbindungsarme lediglich in einer senkrecht zu diesen Schwenkachsen liegenden Ebene verstellbar sind. Die Platten PL1, PL2 sind Bestandteil des Stabkörpers K, der eine senkrecht zur Schwenkebene der Verbindungsarme VA1 bis VA4 verstellbare Einheit 42 aufweist.

An einer Seitenwand des Maschinenbettes 39 sind nebeneinanderliegend zwei Werkzeugmagazine 43, 44 gelagert, die um zueinander parallele horizontale Achsen drehbar sind und die mit entsprechenden Werkzeugen bestückt sind. Die Werkzeuge werden mittels einer Wechseleinrichtung 45 in die Einheit 42 eingewechselt.

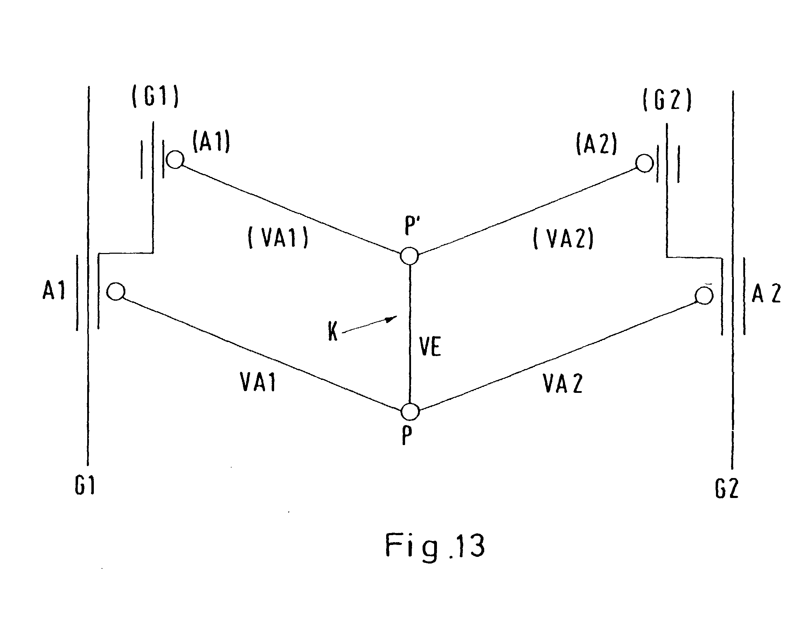

Die Vorrichtung gemäß Fig. 13 hat die zueinander parallelen Linearführungen G1, G2, die beispielsweise vertikal und parallel zueinander angeordnet sind. Auf den beiden Linearführungen G1, G2 ist ein Linearantrieb A1, A2 verfahrbar. Diese Linearantriebe tragen weitere Linearführungen (G1), (G2), auf denen weitere Linearantriebe (A1), (A2) verfahrbar gelagert sind. Die Linearführungen (G1), (G2) liegen parallel zu den Linearführungen G1, G2. An den Linearantrieben A1, A2 sind die einen Enden von Verbindungsarmen VA1, VA2 angelenkt, deren andere Enden am Endpunkt P des Stabkörpers K angelenkt sind. Er hat den weiteren Endpunkt P', der über das Verbindungselement VE mit dem Endpunkt P verbunden ist. Der Endpunkt P' ist über die Verbindungsarme (VA1), (VA2) gelenkig mit den Linearantrieben (A1), (A2) verbunden.

Die Gleitwege (G1), (G2) der Antriebe (A1), (A2) der Verbindungsarme (VA1), (VA2) zur Einstellung des Endpunktes P' werden von den Antrieben A1, A2 zur Einstellung des Endpunktes P getragen. Der Vorteil dieser Ausführungsform besteht darin, daß sich bei Veränderung der Position bei konstanter Orientierung des Verbindungselementes VE die Antriebe A1 und A2 nicht bewegen müssen. Werden die Antriebe A1, A2 längs der Linearführungen G1, G2 gleichsinnig synchron verschoben, werden die Linearführungen (G1), (G2) mitgenommen. Bei einer solchen Positionsänderung des Stabkörpers K bzw. des Verbindungselementes VE müssen die Antriebe (A1), (A2) nicht verfahren werden.

Um die Orientierung des Stabkörpers K bzw. des Verbindungselementes VE zu ändern, können die Antriebe A1, A2 gegensinnig zueinander verfahren werden. Auch hierbei können die Antriebe (A1), (A2) stehenbleiben. Es ist aber auch möglich, die Antriebe (A1), (A2) gegensinnig zueinander zu bewegen und die Antriebe A1, A2 nicht zu verfahren. Selbstverständlich können die Antriebe A1, A2, (A1), (A2) auch in Kombinationen miteinander verfahren werden, um die Position und/oder die Orientierung des Körpers K bzw. des Verbindungselementes VE einzustellen.

Fig. 14 zeigt eine schematische Anordnung zur Verdrehungssicherung des Stabkörpers K um einen Winkel α in einer Schnittebene E mittels eines Parallelogrammes, das die zueinander parallelen Verbindungsarme VA1, VA2 aufweist. Die Verdrehungssicherung wird beim Stabkörper K benötigt, da die Definition über zwei Endpunkte den sechsten Freiheitsgrad der Drehung des Stabkörpers K um den Winkel α undefiniert läßt. Das Parallelogramm gewährt eine Richtungsstabilität für den Winkel α auch bei einer Drehung des Stabkörpers K um den Gleitweg G1, sofern der Stab S des Parallelogrammes richtungsstabil angeordnet ist. Der Stab S ist am Linearantrieb A1 vorgesehen und erstreckt sich quer zu dessen Verfahrrichtung längs des Gleitweges G1. An den beiden Enden des Stabes S befinden sich die Gelenke, an denen die einen Enden der Verbindungsarme VA1, VA2 befestigt sind. Die anderen Enden der Verbindungsarme VA1, VA2 greifen an einander gegenüberliegenden Seiten des Stabkörpers K an und verhindern, daß dieser um seine Achse drehen kann.

Mit gestrichelten Linien ist in Fig. 14 dargestellt, daß die Verdrehsicherung um den Winkel α auch durch eine dreieckförmige Anordnung der Verbindungsarme (VA1), (VA2) erreicht werden kann. Sie sind an den gleichen Stellen wie die Verbindungsarme VA1, VA2 mit ihren einen Enden am Stabkörper K befestigt. Ihre anderen Enden sind unmittelbar am Linearantrieb A1 befestigt.

Fig. 15 schließlich zeigt eine schematische Anordnung zur Verdrehungssicherung mittels eines zur Symmetrieachse des Stabkörpers K leicht schräg gestellten Parallelogrammes. Durch die Schrägstellung wird entsprechend der Projektion des Parallelogrammes auf die zur Symmetrieachse des Stabkörpers K orthogonale Ebene ein Parallelogrammeffekt entsprechend Fig. 14 erreicht. Zur Verdrehsicherung werden die Verbindungsarme VA1, VA2 herangezogen, deren eine Enden an den Enden des richtungsstabilen Stabes S befestigt sind, der sich quer zum Verfahrweg des Linearantriebes A1 erstreckt, der auf der gestellfesten Linearführung G2 verschiebbar ist. Die anderen Enden der Verbindungsarme VA1, VA2 greifen versetzt zueinander an der gleichen Seite des Stabkörpers K an.

Auch bei dieser Ausführungsform wird entsprechend dem vorhergehenden Ausführungsbeispiel durch die parallel liegenden Verbindungsarme die Verdrehung des stabförmigen Körpers K um seine Längsachse gesperrt, wobei diese Verbindungsarme als Parallelogramm wirken und eine Sperrachse aufbauen. Auch bei der in Fig. 14 dargestellten Alternative mit der dreieckförmigen Anordnung wird die Verdrehung des stabförmigen Körpers K um seine Achse gesperrt. Die Fußpunkte der Verbindungsarme (VA1), (VA2) sind auf einen Punkt am Linearantrieb A1 zusammengeführt. Infolge der gelenkigen Befestigung am Stabkörper K bilden diese Verbindungsarme (VA1), (VA2) ein Dreieck, das wie das Parallelogramm eine Sperrachse aufbaut.

Bei den beschriebenen Ausführungsbeispielen sind die Linearführungen teilweise parallel zueinander angeordnet. Anstelle dieser parallelen Lage können die Linearführungen auch so zueinander angeordnet sein, daß sie einen Winkel miteinander einschließen.

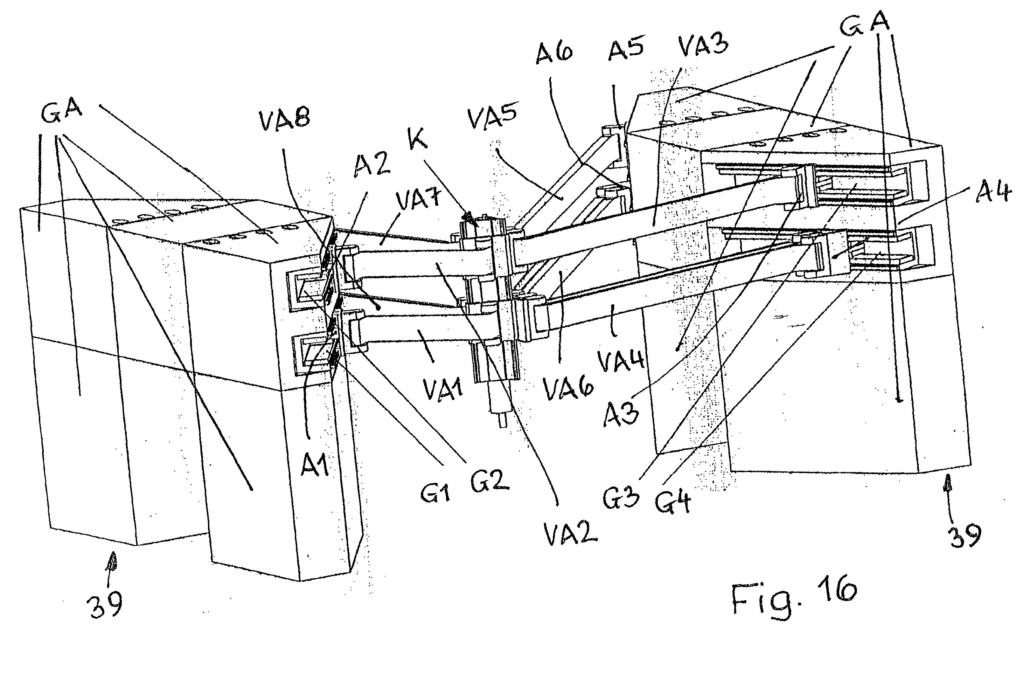

Fig. 16 zeigt eine Vorrichtung, die sich von der Ausführungsform nach Fig. 12e dadurch unterscheidet, daß zur Versteifung der Maschine eine spiegelbildliche Anordnung der Antriebssysteme vorgesehen ist. Diese Maschine ist dreiachsig auf Basis einer Scherenkinematik ausgebildet. Wie Fig. 16 zeigt, hat diese Maschine zwei mit Abstand einander gegenüberliegende Maschinengestelle 39, die jeweils aus mehreren Gestellmodulen GA gebildet sind. Die beiden Maschinengestelle 39 erstrecken sich vertikal und haben jeweils vier Linearführungen, von denen in Fig. 16 lediglich die Linearführungen G1 bis G4 erkennbar sind. Diese Linearführungen liegen paarweise übereinander und horizontal. Jedes Maschinengestell 39 hat paarweise winklig zueinander liegende Linearführungen, in denen jeweils ein Linearantrieb verfahrbar ist. In der Linearführung G1 ist der Linearantrieb A1, in der Linearführung G2 der Linearantrieb A2, in den Linearführungen G3 und G4 die Linearantriebe A3 und A4 sowie in den (nicht.dargestellten) weiteren Linearführungen die Linearantriebe A5 und A6 verfahrbar. An jedem Linearantrieb ist ein Ende jeweils eines Verbindungsarmes VA1 bis VA8 um eine vertikale Achse schwenkbar angelenkt. Die anderen Enden der Verbindungsarme VA1 bis VA8 sind am Stabkörper K mit vertikalen Achsen angelenkt. Der Stabkörper K ist in diesem Falle eine Pinole mit einer Hauptspindel, wie es auch beim Ausführungsbeispiel gemäß Fig. 12e der Fall ist. Da die Achse des Stabkörpers K vertikal angeordnet ist, ist somit eine Verstellung senkrecht zur Bewegungsebene der Verbindungsarme VA1 bis VA8 möglich. Die vertikalen Schwenkachsen der Verbindungsarme VA1 bis VA8 liegen parallel zueinander und zur Achse des Stabkörpers K. Die jeweils übereinander liegenden Verbindungsarme VA1, VA2; VA3, VA4; VA5, VA6; VA7, VA8 sind jeweils gleich lang, wobei die stabkörperseitigen Schwenkachsen fluchtend übereinander angeordnet sind. Der Stabkörper K wird auf die beschriebene Weise durch insgesamt vier Scheren geführt und positoniert. Durch Verfahren der Linearantriebe A1 bis A6 kann der Stabkörper K in jede gewünschte Position innerhalb der Schwenkebene der Scherenkinematiken verstellt werden. Es ist vorteilhaft, sämtliche Linerantriebe für die Verbindungsarme VA1 bis VA8 als aktive Antriebe auszubilden, um die gewünschte Lage des Stabkörpers K einzustellen.

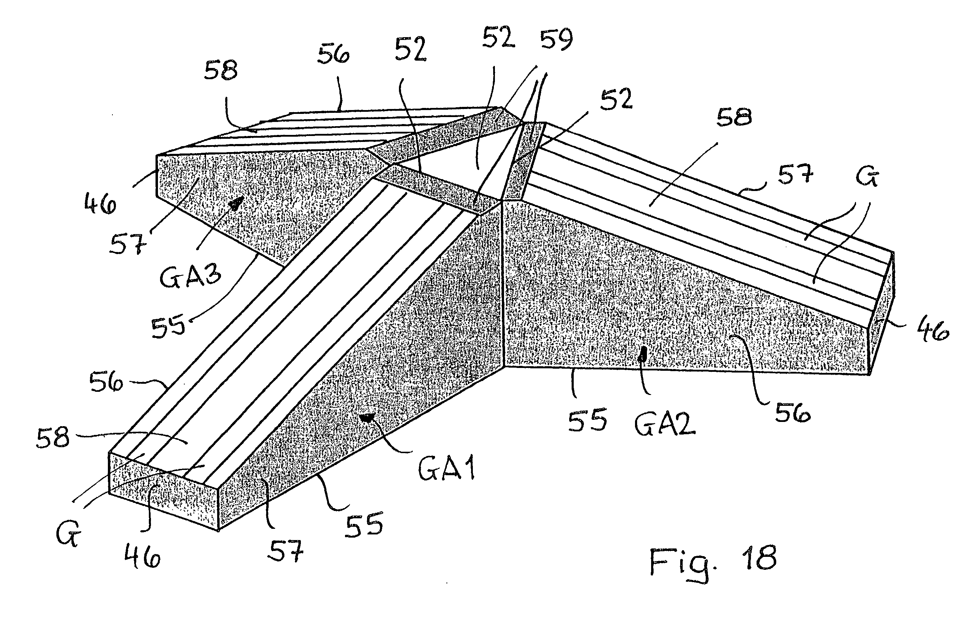

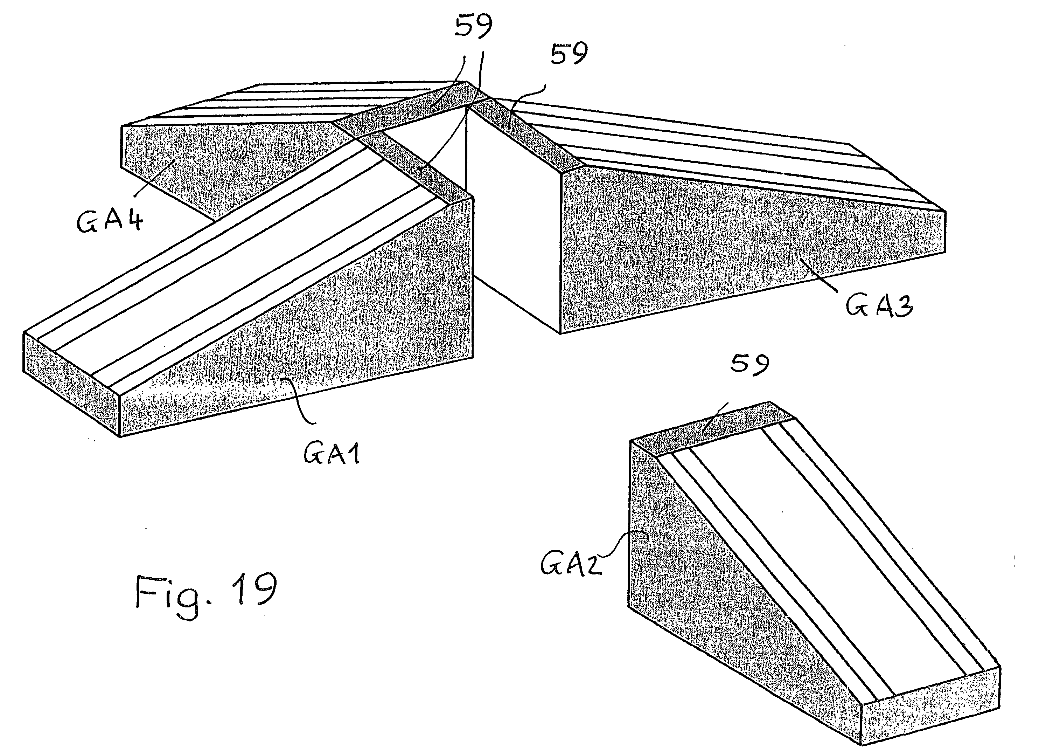

Die beiden Maschinengestelle 39 sind jeweils aus einzelnen Modulen gebildet, die anhand der Fig. 18 und 19 noch näher erläutert werden sollen. Auf Grund der Modulbauweise lassen sich unterschiedlichste Maschinengestelle in Abhängigkeit von der gewünschten Ausbildung des Maschinenbettes aufbauen. Bei der Ausführungsform nach Fig. 16 sind die beiden Maschinengestelle 39 aus jeweils fünf Gestellmodulen GA gebildet, von denen lediglich zwei Gestellmodule mit jeweils zwei Linearführungen versehen sind. Wie beispielsweise anhand von Fig. 12e zu erkennen ist, können diese Gestellmodule in unterschiedlichen Orientierungen montiert werden. Bei dieser Ausführungsform sind die Gestellmodule so angeordnet, daß die Linearführungen G1 bis G4 schräg ansteigend angeordnet sind, so daß die Verbindungsarme VA1 bis VA4 in Vertikalebenen verstellbar sind. Beim Ausführungsbeispiel nach Fig. 16 hingegen sind die mit den Linearführungen G1 bis G4 versehenen Gestellmodule GA so angeordnet, daß die Lineraführungen G1 bis G4 in Horizontalebenen liegen, so daß die Verbindungsarme VA1 bis VA8 in Horizontalebenen bewegbar sind. Die Verbindungsarme VA1 bis VA8 können in den jeweiligen Horizontalebenen liegen. Es ist aber auch möglich, sie so anzuordnen, daß die Verbindungsarme jeder Scherenkinematik aus der jeweiligen Antriebsebene herausragen.

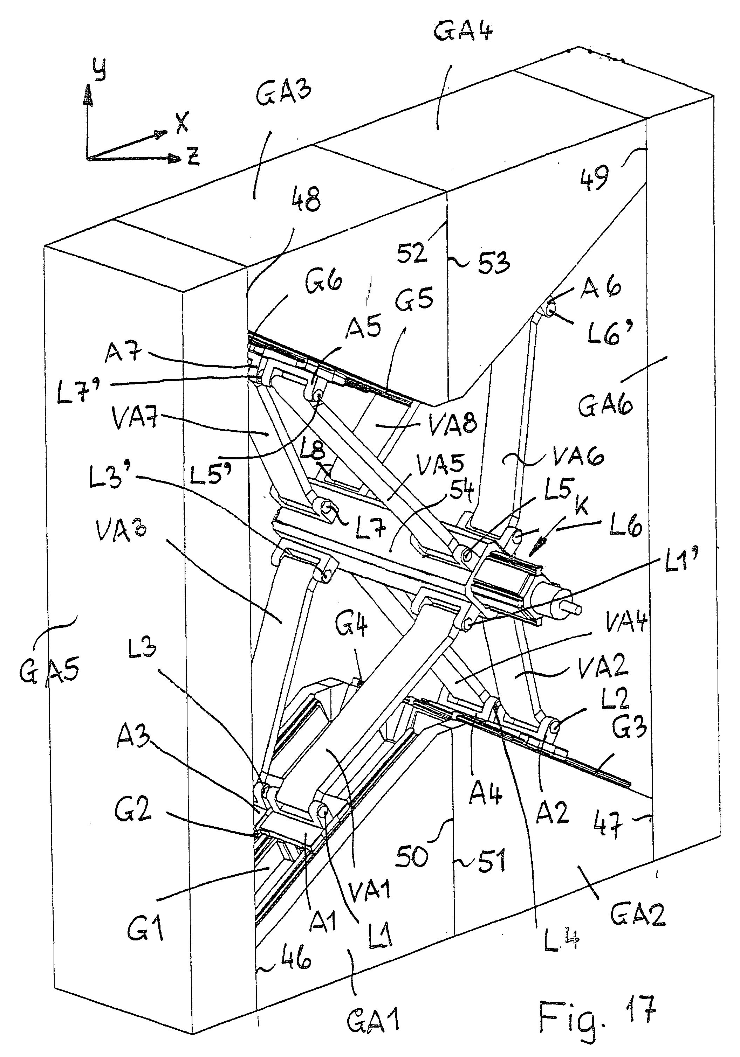

Fig. 17 zeigt eine Maschine, bei der der Stabköper K horizontal angeordnet ist. Er ist wiederum durch eine Pinole mit einer Hauptspindel gebildet, die in Z-Richtung verstellbar ist. Auch hier sind zur Versteifung der Maschine die Antriebssysteme mit den jeweiligen Gestellmodulen spiegelbildlich zueinander angeordnet. Die aneinander liegenden Gestellmodule GA1, GA2 und GA3, GA4 weisen an ihren aneinander zugewandten Seiten die schräg liegenden Linearführungen G1, G2; G3, G4; G5, G6 auf. Die Linearführungen des Gestellmoduls GA4 sind in der Darstellung nach Fig. 17 nicht erkennbar. Die Gestellmodule GA1 bis GA4 bilden einen unteren und einen oberen Rahmenteil. An ihren voneinander abgewandten Seiten sind die Gestellmodule durch vertikale, als Säulen ausgebildete Gestellmodule GA5 und GA6 miteinander zu einem Rahmen verbunden. Diese vertikalen Gestellmodule haben rechteckförmigen Querschnitt. Die Gestellmodule GA1 bis GA6 bilden einen steifen Gestellaufbau und können beispielsweise aus Polymerbeton bestehen. Die Gestellmodule GA1 bis GA4 sind im wesentlichen dreieckförmig ausgebildet und haben an ihren voneinander abgewandten Enden schmale ebene Anschlußflächen 46 bis 49, mit denen sie an den aneinander zugewandten Innenseiten der säulenartigen Gestellmodule GA5 und GA6 anliegen. Die den Anschlußflächen 46 bis 49 gegenüberliegenden und parallel zu ihnen verlaufenden Anschlußflächen 50 bis 53 sind in Vertikalrichtung wesentlich länger als die äußeren Anschlußflächen 46 bis 49. Mit diesen Anschlußflächen 50 bis 53 liegen die Gestellmodule GA1 bis GA4 unmittelbar aneinander an. Die einzelnen Gestellmodule sind mit geeigneten Verbindungselementen miteinander verbunden.

Die Maschine kann wie das Ausführungsbeispiel nach Fig. 16 als dreiachsige Maschine ausgebildet sein. Es ist aber auch möglich, diese Maschine als fünfachsige Maschine einzusetzen. Der Stabkörper K ist wiederum über die Verbindungselemente VA1 bis VA8 mit den Linearantrieben A1 bis A7 verbunden, die in den entsprechenden Linearführungen angeordnet sind. Der Linearantrieb für den Verbindungsarm VA8 ist in Fig. 17 nicht zu erkennen. Die Verbindungsarme sind an ihren Enden jeweils um zueinander parallele Schwenkachsen L1, L1'; L2; L3, L3'; L4; L5, L5'; L6, L6'; L7, L7'; L8 schwenkbar mit dem Stabkörper K und den jeweiligen Linearantrieben A1 bis A7 verbunden. Die weiteren Schwenkachsen und Antriebe sind in Fig. 17 nicht zu erkennen und darum auch nicht mit Bezugszeichen versehen. Wie beim vorigen Ausführungsbeispiel haben die Verbindungsarme VA1 bis VA8 konstante Länge. Die Verbindungsarme können wie beim vorigen Ausführungsbeispiel so angeordnet sein, daß sie in der jeweiligen Antriebsebene liegen oder aus ihr herausragen. Während bei der Ausführungsform nach Fig. 16 die Verbindungsarme VA1, VA4, VA6, VA8 und VA2, VA3, VA5, VA7 nach einer Seite über die jeweilige Antriebsebene ragen, stehen die Verbindungsarme der vorliegenden Ausführungsform entgegengesetzt zueinander aus der Bewegungs(Antriebs)ebene hervor. So sind die nebeneinander liegenden Verbindungsarme VA1, VA3; VA2, VA4; VA5, VA7; VA6, VA8 von Ihrer Anlenkung an den Linearantrieben A1, A3; A2, A4; A5, A7; A6 divergierend verlaufend angeordnet. Der Abstand zwischen den entsprechenden Schwenkachsen an den Linearantrieben ist dadurch kleiner als am Stabkörper K. Auf Grund dieser schrägen und gegensinnigen Anordnung benachbarter Verbindungsarme ergibt sich eine extreme Erhöhung der Steifigkeit der Maschine in Z-Richtung. Die am Stabkörper K vorgesehenen Schwenkachsen sind an einem gemeinsamen Grundkörper 54 vorgesehen. Die Enden der Verbindungsarme VA1, VA2, VA5, VA6 und VA3, VA4, VA7, VA8 liegen im Bereich des Stabkörpers K jeweils auf gleicher Höhe.

Wie beim vorigen Ausführungsbeispiel wird der Stabkörper K durch einfache Scherenkinematiken gehalten und geführt.

Die Linearführungen G1 bis G6 der Gestellmodule GA1 bis GA4 liegen wiederum jeweils schräg zueinander, wie dies anhand von Fig. 16 beschrieben worden ist.

Bei einer dreiachsigen Anordnung beziehungsweise bei einer Ausführung, bei der die Linearantriebe A3 und A4 für eine Orientierungskorrektur eingesetzt werden, können die Verbindungsarme auch über Kreuz angeordnet werden. So kann beispielsweise der Verbindungsarm VA1 von der Schwenkachse L1 aus zur Schwenkachse L3' und der Verbindungsarm VA3 von der Schwenkachse L3 aus zur Schwenkachse L1' geführt werden. Dadurch wird die Baubreite des in Z-Richtung sich erstreckenden Stabkörpers K verringert. Die Schwenkachsen L1' und L3' müssen bei einer solchen Überkreuz-Anordnung selbstverständlich in ihrer Lage versetzt zueinander am Stabkörper K angebracht sein.

Fig. 18 zeigt beispielhaft drei Gestellmodule GA1 bis GA3, die jeweils gleich ausgebildet sind. Sie haben im wesentlichen gleiche Form wie die Gestellmodule GA1 bis GA4 der Vorrichtung gemäß Fig. 17. Die Gestellmodule haben in Seitenansicht etwa Dreieckform und haben eine ebene Unterseite 55, mit der sie in der Darstellung gemäß Fig. 18 auf einem Untergrund aufliegen. Die Unterseite 55 hat rechteckigen Umriß. An die eine Schmalseite der Unterseite 55 schließt rechtwinklig die Anschlußfläche 46 und an die andere Schmalseite rechtwinklig die Anschlußfläche 52 an, die wie die gegenüberliegende Anschlußfläche 46 rechteckigen Umriß hat. Die beiden Anschlußflächen 46, 52 jedes Gestellmoduls GA1 bis GA3 sind durch parallel zueinander liegende Seitenflächen 56, 57 miteinander verbunden. Sie liegen rechtwinklig zu den Anschlußflächen 46, 52. Die der Unterseite 55 gegenüberliegende Oberseite 58 verläuft von der oberen Kante der Anschlußfläche 46 aus schräg aufwärts bis nahe an die obere Kante der gegenüberliegenden, größeren Anschlußfläche 52. Die schräg liegende Oberseite 58 geht in eine schmale, parallel zur Unterseite 55 liegende ebene Stirnfläche 59 über, welche die schräg liegende Oberseite 58 mit dem oberen Rand der Anschlußfläche 52 verbindet. Da die Gestellmodule GA1 bis GA3 gleich ausgebildet sind, liegen die Stirnseiten 59 in einer gemeinsamen Ebene.

Die Oberseiten 58 der Gestellmodule GA1 bis GA3 sind mit den parallel zueinander sowie parallel zu den Seitenrändern der Oberseite verlaufenden Linearführungen G versehen, welche die (nicht dargestellten) Linearantriebe aufnehmen. Bei Maschinengestellen, wie sie beispielhaft in Fig. 16 dargestellt sind, können die Gestellmodule auch ohne Linearführungen vorgesehen sein, so daß solche Gestellmodule beispielsweise als Träger für mit Linearführungen versehene Gestellmodule dienen können. Im Ausführungsbeispiel nach Fig. 18 liegen die Gestellmodule GA1 bis GA3 jeweils unter einem Winkel von 60° zueinander, wobei die Gestellmodule mit ihren in Vertikalrichtung verlaufenden Ränder aneinander liegen. Die Gestellmodule können in geeigneter Weise fest miteinander verbunden werden. Hierfür stehen an sich bekannte unterschiedlichste Verbindungselemente zur Verfügung.

Die Gestellmodule können selbstverständlich unter jedem anderen geeigneten Winkel zueinander angeordnet sein. Auch können die Gestellmodule in einer anderen Lage in bezug zueinander vorgesehen sein. In der dargestellten Ausführungsform liegen die größeren Anschlußflächen 52 mit ihren Vertikalrändern aneinander. Ebenso ist es selbstverständlich möglich, die Gestellmodule GA1 bis GA3 um 180° verdreht anzuordnen, so daß sie mit ihren kleinen Anschlußflächen 46 randseitig aneinander liegen. Ebenso müssen die Gestellmodule auch nicht liegend angeordnet sein, wie in Fig. 18 dargestellt ist. So können die Gestellmodule auch stehend oder hängend angeordnet werden. Eine hängende Anordnung der Gestellmodule zeigt beispielsweise die Ausführungsform gemäß Fig. 17, bei der die Gestellmodule GA3 und GA4 die hängende Lage einnehmen. Weiter ist es möglich, die Gestellmodule GA1 bis GA3 beispielsweise mit Ihrer Anschlußfläche 52 auf dem Untergrund stehend anzuordnen. In diesem Falle können die Unterseite 55 und/oder die Seitenflächen 56, 57 als Anschlußflächen verwendet werden. Schließlich ist es auch möglich, die Gestellmodule GA1 bis GA3 mit einer ihrer Seitenflächen 56 oder 57 liegend anzuordnen, so daß in diesem Fall die Oberseite 58 in einer Vertikalebene liegt.

Fig. 19 zeigt beispielhaft, daß beispielsweise auch vier Gestellmodule GA1 bis GA3 rechtwinklig zueinander angeordnet sein können. In diesem Falle können die Gestellmodule einander geringfügig überlappend angeordnet sein, wie dies für die Gestellmodule GA1, GA3 und GA4 dargestellt ist. In diesem Falle liegen die Gestellmodule nicht mit ihren Rändern, sondern flächig aneinander. Die einander gegenüberliegenden Gestellmodule GA1 und GA3 überlappen das Gestellmodul GA4 um die Breite der ebenen Stirnseite 59. Auch das Gestellmodul GA2 wird in montierter Lage in entsprechender Weise von den beiden anderen, rechtwinklig zu ihm liegenden Gestellmodulen GA1 und GA3 überlappt. Im übrigen sind die Gestellmodule GA1 bis GA4 gleich ausgebildet wie beim vorigen Ausführungsbeispiel. Auch die anhand des vorigen Ausführungsbeispieles beschriebenen Varianten können beim vorliegenden Ausführungsbeispiel verwendet werden.

## Patentansprüche

1. Vorrichtung zur Bewegung eines Körpers (K) im Raum, der mit Verbindungsarmen (VA) gelenkig verbunden ist, die jeweils mindestens zwei Freiheitsgrade haben und jeweils mit mindestens einem Antrieb (A) zur Steuerung eines aktiven Freiheitsgrades versehen sind, und von denen bei zumindest einem Teil der Wirksame Abstand zwischen ihren Verbindungsstellen unveränderlich ist,
**dadurch gekennzeichnet, daß** der Körper (K) stabförmig ausgebildet ist, daß der eine Endpunkt (P) des Stabkörpers (K) die Position im Raum und der andere Endpunkt (P') in Verbindung mit dem ersten Endpunkt (P) die Orientierung des Stabkörpers (K) bestimmt, und daß die Verbindungsarme (VA) zur Einstellung dieser beiden Endpunkte (P, P') und somit der Einstellung der Position und Orientierung dienen.

2. Vorrichtung nach Anspruch 1,
**dadurch gekennzeichnet, daß** bei zumindest denjenigen Verbindungsarmen (VA), die zur Positionierung des Stabkörpers (K) herangezogen werden, der Abstand zwischen ihren Verbindungsstellen unveränderlich ist.

3. Vorrichtung nach Anspruch 1 oder 2,
**dadurch gekennzeichnet, daß** der Stabkörper (K) beliebige Abmessungen und Formausprägungen aufweist.

4. Vorrichtung nach einem der Ansprüche 1 bis 3,
**dadurch gekennzeichnet, daß** die Freiheitsgrade des Fußpunktes der Verbindungselemente (VA) durch Dreh- und/oder Schubgelenke hergestellt sind.

5. Vorrichtung nach einem der Ansprüche 1 bis 4,
**dadurch gekennzeichnet, daß** die Enden beteiligter Verbindungsarme (VA) in einem Punkt zusammengeführt sind, und daß vorzugsweise bei der Verbindung von zwei Verbindungsarmen (VA) in einem Punkt bei translatorisch beweglichen Fußpunkten die Verbindungsarme zu einer Mehrfachschere erweitert sind.

6. Vorrichtung nach einem der Ansprüche 1 bis 5,
**dadurch gekennzeichnet, daß** die beiden Endpunkte (P, P') des Stabkörpers (K) durch ein Verbindungselement (VE) miteinander verbunden sind.

7. Vorrichtung nach Anspruch 6,
**dadurch gekennzeichnet, daß** die Länge des Verbindungselementes (VE) zur Einstellung des Abstandes zwischen den Endpunkten (P, P') des Stabkörpers (K) veränderbar ist, und daß vorzugsweise durch Längenveränderung des Verbindungselementes (VE) die Verbindungsarme (VA) unter Spannung setzbar sind.

8. Vorrichtung nach Anspruch 6 oder 7,
**dadurch gekennzeichnet, daß** das Verbindungselement (VE) nach außen zu einem Drehpunkt (DP) verlängert ist, um den vorzugsweise eine Achse (SP) schwenkbar ist, deren eines Ende (P') vorteilhaft über mindestens einen Verbindungsarm mit einem Linearantrieb (A5, A6) gelenkig verbunden ist.

9. Vorrichtung nach einem der Ansprüche 1 bis 8,
**dadurch gekennzeichnet, daß** durch Längenveränderung des Verbindungselementes (VE) dessen Orientierung veränderbar ist.

10. Vorrichtung nach einem der Ansprüche 1 bis 9,
**dadurch gekennzeichnet, daß** die Verbindungsarme (VA) zum Stabkörper (K) und seinen Endpunkten (P, P') einen Teil eines Parallelogrammes bilden.

11. Vorrichtung nach einem der Ansprüche 1 bis 10,
**dadurch gekennzeichnet, daß** die mit dem einen Endpunkt (P) des Stabkörpers (K) verbundenen Verbindungsarme (VA1 bis VA3) und die mit dem anderen Endpunkt (P') verbundenen Verbindungsarme (VA4 bis VA6) spiegelbildlich zueinander angeordnet sind.

12. Vorrichtung nach einem der Ansprüche 1 bis 11,
**dadurch gekennzeichnet, daß** mindestens einer der Verbindungsarme (VA) zur Orientierungsänderung des Verbindungselementes (VE) längenveränderlich ist.

13. Vorrichtung nach einem der Ansprüche 1 bis 12,
**dadurch gekennzeichnet, daß** das Verbindungselement (VE) gegenüber einer in der Position und Orientierung fixierten Plattform (PL) vorzugsweise mit mindestens einem Führungselement (F) in mindestens einer, vorzugsweise auf einem Kreisbogen um den einen Endpunkt (P) des Stabkörpers (K) liegenden Führung (L) so geführt ist, daß bei einer Orientierungsänderung des Verbindungselementes (VE) die Position des einen Endpunktes (P) des Stabkörpers (K) unverändert bleibt.

14. Vorrichtung nach Ansprüche 13,
**dadurch gekennzeichnet, daß** die Führung (L) um eine Radiale ihres Kreisbogens um einen Winkel (α) drehbar ist.

15. Vorrichtung nach einem der Ansprüche 1 bis 14,
**dadurch gekennzeichnet, daß** die Orientierung des Verbindungselementes (VE) über zwei in Position und Orientierung definierte Plattformen (PL1, PL2) einstellbar ist, die jeweils einen der Endpunkte (P oder P') des Verbindungselementes (VE) enthalten.

16. Vorrichtung nach einem der Ansprüche 1 bis 15,
**dadurch gekennzeichnet, daß** das Verbindungselement (VE) über Lagerstellen (L1, L2), die vorzugsweise in zueinander parallelen Ebenen (E1, E2) bewegbar sind, mit den Plattformen (PL1, PL2) verbunden ist.

17. Vorrichtung nach Anspruch 16,
**dadurch gekennzeichnet, daß** durch variable Verlängerung des Verbindungselementes (VE) für den einen Endpunkt (P) des Stabkörpers (K) ein weiterer Freiheitsgrad erzeugbar ist.

18. Vorrichtung nach einem der Ansprüche 1 bis 17,
**dadurch gekennzeichnet, daß** die Lagerstellen (L1, L2) jeweils über einen Scherenantrieb oder einen Doppelscherenantrieb lageveränderlich sind, und daß die Scheren zur Veränderung der Lagerstellen (L1, L2) vorzugsweise mechanisch fest miteinander gekoppelt sind.

19. Vorrichtung nach einem der Ansprüche 1 bis 18,
**dadurch gekennzeichnet, daß** zwei translatorische Antriebe (A1, (A1); A2, (A2)) so zusammengefaßt sind, daß ein Antrieb den anderen trägt, und daß vorzugsweise der getragene Antrieb ((A1), (A2)) den Fußpunkt (P') des Verbindungselementes (VE) bildet, das zur Orientierungseinstellung herangezogen wird.

20. Vorrichtung nach einem der Ansprüche 1 bis 19,
**dadurch gekennzeichnet, daß** zwei translatorische Antriebe zu einem Antrieb vereint werden, der die Fußpunkte von zwei Verbindungsarmen (VA) aufnimmt, die durch ihre Lage als Teil eines Parallelogrammes oder eines Dreiecks Freiheitsgrade des Verbindungselementes (VE) sperren.

21. Vorrichtung nach einem der Ansprüche 1 bis 20,
**dadurch gekennzeichnet, daß** eine Verdrehung des Verbindungselementes (VE) bzw. des Stabkörpers (K) um die Längsachse mittels zweier Verbindungsarme (VA) sperrbar ist.

22. Vorrichtung nach Anspruch 21,
**dadurch gekennzeichnet, daß** die Verbindungsarme (VA) parallel zueinander liegen und als Parallelogramm wirken und eine Sperrachse aufbauen.

23. Vorrichtung nach Anspruch 21,
**dadurch gekennzeichnet, daß** die Fußpunkte der Verbindungsarme (VA) auf einen Punkt zusammengeführt sind, und daß die Verbindungsarme (VA) infolge ihrer gelenkigen Befestigung am Stabkörper (K) ein Dreieck bilden, das eine Sperrachse aufbaut.

24. Vorrichtung nach einem der Ansprüche 1 bis 23,
**dadurch gekennzeichnet, daß** die Verbindungsarme (VA1 bis VA8) Scherenkinematiken bilden, die spiegelbildlich zueinander angeordnet sind, und daß vorzugsweise der Stabkörper (K) über vier Stabkinematiken gelenkig mit den Antrieben (A1 bis A7) verbunden ist.

25. Vorrichtung nach einem der Ansprüche 1 bis 24,
**dadurch gekennzeichnet, daß** die Verbindungsarme (VA1 bis VA8) jeder Stabkinematik aus der Antriebsebene der jeweiligen Stabkinematik herausragen, und daß vorzugsweise die beiden Verbindungsarme (VA1, VA3; VA2, VA4; VA5, VA7; VA6, VA8) jeder Stabkinematik von ihrer Anlenkstelle (L1, L3; L2, L4; L5, L7; L6, L8) an den Antrieben (A1, A3; A2, A4; A5, A7; A6) aus divergierend verlaufen.

26. Vorrichtung nach einem der Ansprüche 1 bis 25,
**dadurch gekennzeichnet, daß** die Vorrichtung mindestens ein Gestell (39) aufweist, das aus vorteilhaft aus Polymerbeton bestehenden Gestellmodulen (GA1 bis GA6) aufgebaut ist, die vorzugsweise einen Gestellrahmen bilden.

## Claims

1. A device for moving a body (K) in space, the said body being hingeably connected to connector arms (VA) each of which has a minimum of two degrees of freedom is provided with at least one drive (A) for controlling an active degree of freedom, and of which in at least one part the effective distance between their connection points is unchangeable, **characterised in that** the body (K) is rod-shaped, that one end point (P) of the rod-shaped body (K) determines the position in space, and the other end point (P') in conjunction with the first end point (P) determines the orientation of the rod-shaped body (K), and that the connector arms (VA) serve to adjust these two end points (P, P') and thus to adjust the position and orientation.

2. A device according to Claim 1,
**characterised in that**, at least in the case of the connector arms (VA) used for positioning the rod-shaped body (K), the distance between their connection points is unchangeable.

3. A device according to Claim 1 or 2,
**characterised in that** the rod-shaped body (K) has arbitrary dimensions and a non-linear contour.

4. A device according to one of Claims 1 to 3,
**characterised in that** the degrees of freedom of the root of the connecting members (VA) are created via swivel joints and/or sliding joints.

5. A device according to one of Claims 1 to 4,
**characterised in that** the ends of participating connector arms (VA) are brought together at a point and that, preferably in association with the connection of two connector arms (VA) at a point, in the case of translationally movable roots the connector arms are spread in the form of multiple scissors.

6. A device according to one of Claims 1 to 5,
**characterised in that** the two end points (P, P') of the rod-shaped body (K) are connected to each other via a connecting member (VE).

7. A device according to Claim 6,
**characterised in that** the length of the connecting member (VE) may be altered for the purpose of adjusting the distance between the end points (P, P') of the rod-shaped body (K), and that the connector arms (VA) may be tensioned preferably by changing the length of the connecting member (VE).

8. A device according to Claim 6 or 7,
**characterised in that** the connecting member (VE) may be lengthened towards the outside to a point of rotation (DP), is swivellable about the preferably one axis (SP), one end (P') of which is advantageously hingeably connected to a linear drive (A5, A6) via at least one connector arm.

9. A device according to one of Claims 1 to 8,
**characterised in that** the orientation of the connecting member (VE) may be altered by changing the length thereof.

10. A device according to one of Claims 1 to 9,
**characterised in that** the connector arms (VA) relative to the rod-shaped body (K) and the end points (P, P') thereof form part of a parallelogram.

11. A device according to one of Claims 1 to 10,
**characterised in that** the connector arms (VA1 to VA3) connected to the one end point (P) of the rod-shaped body (K) and the connector arms (VA4 to VA6) connected to the other end point (P') are in a mirror-image arrangement relative to one another.

12. A device according to one of Claims 1 to 11,
**characterised in that** the length of at least one of the connector arms (VA) may be altered to change the orientation of the connecting member (VE).

13. A device according to one of Claims 1 to 12,
**characterised in that** the connecting member (VE) is guided in such a way relative to a platform (PL) of fixed position and orientation, preferably with at least one guide member (F) in at least one guiding device (L) preferably positioned on an arc about an end point (P) of the rod-shaped body (K) that, when the orientation of the connecting member (VE) is changed, the position of the one end point (P) of the rod-shaped body (K) remains unchanged.

14. A device according to Claim 13,
**characterised in that** the guiding device (L) is rotatable through an angle (α) about a radius of its arc.

15. A device according to one of Claims 1 to 14,
**characterised in that** the orientation of the connecting member (VE) is adjustable via two platforms (PL1, PL2) defined in position and orientation, each of which contains one of the end points (P or P') of the connecting member (VE).

16. A device according to one of Claims 1 to 15,
**characterised in that** the connecting member (VE) is connected to the platforms (PL1, PL2) via bearings (L1, L2) which are preferably movable in mutually parallel planes (E1, E2).

17. A device according to Claim 16,
**characterised in that** a further degree of freedom can be created for the one end point (P) of the rod-shaped body (K) by variably lengthening the connecting member (VE).

18. A device according to one of Claims 1 to 17,
**characterised in that** the position of the bearings (L1, L2) may be changed in each case via a scissor-type drive or a dual scissor-type drive, and that the scissors are firmly linked together mechanically to change the position of the bearings (L1, L2).

19. A device according to one of Claims 1 to 18,
**characterised in that** two translational drives (A1, (A1); A2, (A2)) are co-ordinated in such a way that one drive carries the other, and that preferably the borne drive ((A1), (A2)) forms the root (P') of the connecting member (VE) that is used to adjust the orientation.

20. A device according to one of Claims 1 to 19,
**characterised in that** two translational drives are united to form a single drive which accommodates the roots of two connector arms (VA) which, by means of their position as part of a parallelogram or of a triangle, block degrees of freedom of the connecting member (VE).

21. A device according to one of Claims 1 to 20,
**characterised in that** rotation of the connecting member (VE) or rod-shaped body (K) about the long axis is blockable by means of two connector arms (VA).

22. A device according to Claim 21,
**characterised in that** the connector arms (VA) are mutually parallel and function as a parallelogram and form a blocking axis.

23. A device according to Claim 21,
**characterised in that** the roots of the connector arms (VA) are brought together to a point and that, as a result of their hingeable attachment to the rod-shaped body (K), the connector arms (VA) form a triangle which creates a blocking axis.

24. A device according to one of Claims 1 to 23,
**characterised in that** the connector arms (VA1 to VA8) form kinematic scissor-type members which are in a mirror-image arrangement relative to one another, and that preferably the rod-shaped body (K) is hingeably connected to the drives (A1 to A7) via four kinematic rod-shaped members.

25. A device according to one of Claims 1 to 24,
**characterised in that** the connector arms (VA1 to VA8) of each kinematic rod-shaped member project from the drive plane of the respective kinematic rod-shaped member, and that preferably the two connector arms (VA1, VA3; VA2, VA4; VA5, VA7; VA6, VA8) of each kinematic rod-shaped member follow a diverging course from their point of articulation (L1, L3; L2, L4; L5, L7; L6, L8) to the drives (A1, A3; A2, A4; A5, A7; A6).

26. A device according to one of Claims 1 to 25,
**characterised in that** the device has at least one support (39) constructed from support modules (GA1 to GA6), advantageously consisting of concrete polymer, which preferably form a support frame.

## Revendications

1. Dispositif pour le déplacement d'un corps (K) dans l'espace, qui est relié en articulation à des bras de liaison (VA) qui présentent chacun au moins deux degrés de liberté et qui sont pourvus chacun d'au moins un entraînement (A) pour la commande d'un degré de liberté actif et dans lesquels, dans une partie au moins, la distance efficace entre leurs emplacements de liaison est invariable, **caractérisé en ce que** le corps (K) est réalisé en forme de barre, **en ce que** l'un des points d'extrémité (P) du corps en barre (K) détermine la position dans l'espace et l'autre point d'extrémité (P') détermine, en association avec le premier point d'extrémité (P), l'orientation du corps en barre (K), et **en ce que** les bras de liaison (VA) servent au réglage de ces deux points d'extrémité (P, P') et ainsi au réglage de la position et de l'orientation.

2. Dispositif selon la revendication 1, **caractérisé en ce qu'**au moins dans ceux des bras de liaison (VA) qui servent au positionnement du corps en barre (K), la distance entre leurs emplacements de liaison est invariable.

3. Dispositif selon l'une ou l'autre des revendications 1 et 2, **caractérisé en ce que** le corps en barre (K) présentent des dimensions et conformations quelconques.

4. Dispositif selon l'une quelconque des revendications 1 à 3, **caractérisé en ce que** les degrés de liberté du point de base des éléments de liaison (VA) sont réalisés par des articulations tournantes et/ou par des joints à glissière.

5. Dispositif selon l'une quelconque des revendications 1 à 4, **caractérisé en ce que** les extrémités des bras de liaison concernés (VA) sont réunies en un point, et **en ce que** de préférence pour la liaison de deux bras de liaison (VA) en un point, les bras de liaison sont prolongés pour former un pantographe multiple pour des points de base mobiles en translation.

6. Dispositif selon l'une quelconque des revendications 1 à 5, **caractérisé en ce que** les deux points d'extrémité (P, P') du corps en barre (K) sont reliés l'un à l'autre par un élément de liaison (VE).

7. Dispositif selon la revendication 6, **caractérisé en ce que** la longueur de l'élément de liaison (VE) est variable pour le réglage de la distance entre les points d'extrémité (P, P') du corps en barre (K), et **en ce que** les bras de liaison (VA) sont susceptibles d'être mis sous contrainte de préférence par une modification en longueur de l'élément de liaison (VE).

8. Dispositif selon l'une ou l'autre des revendications 6 et 7, **caractérisé en ce que** l'élément de liaison (VE) est prolongé vers l'extérieur vers un point de rotation (DP) autour duquel peut de préférence pivoter un axe (SP) dont une extrémité (P') est reliée avantageusement via au moins un bras de liaison à un entraînement linéaire (A5, A6).

9. Dispositif selon l'une quelconque des revendications 1 à 8, **caractérisé en ce que** l'orientation de l'élément de liaison (VE) est variable par une modification en longueur de celui-ci.

10. Dispositif selon l'une quelconque des revendications 1 à 9, **caractérisé en ce que** les bras de liaison (VA) vers le corps en barre (K) et vers ses points d'extrémité (P, P') forment une partie d'un parallélogramme.

11. Dispositif selon l'une quelconque des revendications 1 à 10, **caractérisé en ce que** les bras de liaison (VA1 à VA3) reliés à l'un des points d'extrémité (P) du corps en barre (K) et les bras de liaison (VA4 à VA6) reliés à l'autre point d'extrémité (P') sont agencés à symétrie les uns par rapport aux autres.

12. Dispositif selon l'une quelconque des revendications 1 à 11, **caractérisé en ce que** l'un au moins des bras de liaison (VA) est variable en longueur pour la modification de l'orientation de l'élément de liaison (VE).

13. Dispositif selon l'une quelconque des revendications 1 à 12, **caractérisé en ce que** l'élément de liaison (VE) est guidé par rapport à une plate-forme (PL) fixée vis-à-vis de sa position et de son orientation de préférence au moyen d'au moins un élément de guidage (F) dans au moins un guidage (L) situé de préférence sur un arc de cercle autour de l'un des points d'extrémité (P) du corps en barre (K), de telle sorte que lors d'une modification de l'orientation de l'élément de liaison (VE), la position de l'un des points d'extrémité (P) du corps en barre (K) reste inchangée.

14. Dispositif selon la revendication 13, **caractérisé en ce que** le guidage (L) est mobile en rotation d'un angle (α) autour d'un rayon de son arc de cercle.

15. Dispositif selon l'une quelconque des revendications 1 à 14, **caractérisé en ce que** l'orientation de l'élément de liaison (VE) est réglable via deux plates-formes (PL1, PL2) définies vis-à-vis de leur position et de leur orientation, qui comprennent chacune l'un des points d'extrémité (P ou P') de l'élément de liaison (VE).

16. Dispositif selon l'une quelconque des revendications 1 à 15, **caractérisé en ce que** l'élément de liaison (VE) est relié aux plates-formes (PL1, PL2) via des emplacements de palier (L1, L2) qui sont de préférence mobiles dans des plans (E1, E2) parallèles l'un à l'autre.

17. Dispositif selon la revendication 16, **caractérisé en ce qu'**un autre degré de liberté peut être réalisé pour l'un des points d'extrémité (P) du corps en barre (K) par un plongement variable de l'élément de liaison (VE).

18. Dispositif selon l'une quelconque des revendications 1 à 17, **caractérisé en ce que** les emplacements de palier (L1, L2) sont variables vis-à-vis de leur position chacun via un entraînement en pantographe ou via un entraînement à double pantographe, et **en ce que** les pantographes sont de préférence accouplés fermement l'un à l'autre par voie mécanique pour modifier les emplacements de palier (L1, L2).

19. Dispositif selon l'une quelconque des revendications 1 à 18, **caractérisé en ce que** deux entraînements en translation (A1, (A1); A2, (A2)) sont ainsi réunies qu'un entraînement porte l'autre, et **en ce que** de préférence l'entraînement porté ((A1), (A2)) forme le point de base (P') de l'élément de liaison (VE) qui sert au réglage de l'orientation.

20. Dispositif selon l'une quelconque des revendications 1 à 19, **caractérisé en ce que** deux entraînements en translation sont réunis en un entraînement qui reçoit les points de base de deux bras de liaison (VA) qui condamnent des degrés de liberté de l'élément de liaison (VE) par leur situation en tant que partie d'un parallélogramme ou d'un triangle.

21. Dispositif selon l'une quelconque des revendications 1 à 20, **caractérisé en ce qu'**une rotation de l'élément de liaison (VE) ou du corps en barre (K) autour de l'axe longitudinal peut être condamnée au moyen de deux bras de liaison (VA).

22. Dispositif selon la revendication 21, **caractérisé en ce que** les bras de liaison (VA) se trouvent parallèlement les uns aux autres et font office de parallélogramme et établissent un axe de condamnation.

23. Dispositif selon la revendication 21, **caractérisé en ce que** les points de base des bras de liaison (VA) sont réunis en un point, et **en ce que** les bras de liaison (VA) forment un triangle en raison de leur fixation en articulation sur le corps en barre (K), triangle qui établit un axe de condamnation.

24. Dispositif selon l'une quelconque des revendications 1 à 23, **caractérisé en ce que** les bras de liaison (VA1 à VA8) forment des cinématiques à pantographe qui sont agencées à symétrie l'une par rapport à l'autre, et **en ce que** de préférence le corps en barre (K) est relié en articulation aux entraînements (A1 à A7) via quatre cinématiques à barres.

25. Dispositif selon l'une quelconque des revendications 1 à 24, **caractérisé en ce que** les bras de liaison (VA1 à VA8) de chaque cinématique à barres font saillie du plan d'entraînement de la cinématique à barres respective, et **en ce que** de préférence les deux bras de liaison (VA1, VA3 ; VA2, VA4 ; VA5, VA7 ; VA6, VA8) de chaque cinématique à barres s'étendent de manière à diverger à partir de leur emplacement d'articulation (L1, L3 ; L2, L4 ; L5, L7 ; L6, L8) sur les entraînements (A1, A3; A2, A4 ; A5, A7 ; A6).

26. Dispositif selon l'une quelconque des revendications 1 à 25 **caractérisé en ce que** le dispositif comprend au moins un châssis (39) qui est constitué avantageusement par des modules de châssis (GA1 à GA6) constitués en béton au polymère qui forment de préférence un cadre de châssis.
